# EUROPEAN PATENT APPLICATION

(11) **EP 4 773 080 A1**
(43) Date of publication of application: **08.07.2026**
(21) Application number: 24943248.5
(22) Date of filing: 20.12.2024
(51) Int. Cl.: G06T 7/11, G06T 7/136

(54) **IMAGE CROPPING METHOD, ELECTRONIC DEVICE, AND COMPUTER-READABLE STORAGE MEDIUM**

(30) Priority: 13.06.2024 CN 202410767538
(71) Applicant: HUAWEI TECHNOLOGIES CO., LTD., Shenzhen 518129 (CN)
(72) Inventor: LIU, Mengdi, Shenzhen, Guangdong 518129 (CN); LIU, Chunliang, Shenzhen, Guangdong 518129 (CN); ZHOU, Ziyao, Shenzhen, Guangdong 518129 (CN)
(74) Representative: Maiwald GmbH
(86) International application number: PCT/CN2024/141028
(87) International publication number: WO 2025/256096

(57) **Abstract**

This application is applicable to the field of terminal technologies, and in particular, relates to an image cropping method, an electronic device, and a computer-readable storage medium. In this method, after obtaining an original image including a target object, the electronic device may determine a body aesthetic degree and/or a facial aesthetic degree of the target object. Subsequently, the electronic device may determine, based on the body aesthetic degree and/or the facial aesthetic degree of the target object, a target cropping manner in which posture aesthetics and/or facial aesthetics of the target object can be highlighted, and may crop the original image in the target cropping manner, to obtain a cropped image, so that the posture aesthetics and/or the facial aesthetics of the original image can be retained in the cropped image. This can improve aesthetics of the cropped image and user experience.

## Description

This application claims priority to Chinese Patent Application No. 202410767538.9, filed with the China National Intellectual Property Administration on June 13, 2024, and entitled "IMAGE CROPPING METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, relates to an image cropping method, an electronic device, and a computer-readable storage medium.

### BACKGROUND

An electronic device like a mobile phone or a tablet computer generally has a function of automatically cropping an image, that is, may automatically crop the image in a default cropping manner. For example, when setting a screen saver or a lock screen image, a user may upload a personalized image. After obtaining the personalized image, the electronic device may automatically crop the personalized image in the default cropping manner to obtain a cropped image of a specified size, and apply the cropped image to a screen saver, a lock screen, or the like. However, all images are cropped in the default cropping manner, and consequently, aesthetics of the images cannot be highlighted in cropped images, resulting in poor user experience.

### SUMMARY

Embodiments of this application provide an image cropping method, an electronic device, and a computer-readable storage medium, to improve aesthetics of a cropped image and user experience.

According to a first aspect, an embodiment of this application provides an image cropping method. The method may include:
obtaining an original image, where the original image includes a target object;
determining a body aesthetic degree of the target object, and/or determining a facial aesthetic degree of the target object;
determining, based on the body aesthetic degree and/or the facial aesthetic degree, a target cropping manner corresponding to the original image; and
cropping the original image in the target cropping manner, to obtain a cropped image, where the cropped image includes all or a part of the target object.

In the image cropping method provided above, after obtaining the original image including the target object, an electronic device may determine the body aesthetic degree and/or the facial aesthetic degree of the target object. Subsequently, the electronic device may determine, based on the body aesthetic degree and/or the facial aesthetic degree of the target object, the target cropping manner in which posture aesthetics and/or facial aesthetics of the target object can be highlighted, and may crop the original image in the target cropping manner, to obtain the cropped image, so that the posture aesthetics and/or the facial aesthetics of the original image can be retained in the cropped image. This can improve aesthetics of the cropped image and user experience.

The target cropping manner may be a body-first cropping manner, or may be a face-first cropping manner. The body-first cropping manner may mean that during image cropping, a body may be a factor that is preferentially considered, that is, retaining integrity of the body may be a factor that is preferentially considered to be retained. The face-first cropping manner may mean that during image cropping, a face may be a factor that is preferentially considered, that is, highlighting a facial feature may be a factor that is preferentially considered.

In other words, when determining that the target cropping manner is the body-first cropping manner, and when cropping the original image in the target cropping manner, the electronic device may preferentially retain the integrity of the body, for example, may crop the original image into a full-length image. When determining that the target cropping manner is the face-first cropping manner, and when cropping the original image in the target cropping manner, the electronic device may preferentially highlight the facial feature, for example, may crop the original image into a half-length image in which the facial feature is highlighted.

In some embodiments, determining body aesthetic degree of the target object may include:
determining a body kinetic degree of the target object, where the body kinetic degree represents a motion status of the target object; and
determining the body aesthetic degree of the target object based on the body kinetic degree.

It should be noted that, people generally consider that a body aesthetic degree of the target object in the moving state is higher than a body aesthetic degree of the target object in a stationary state.

In the image cropping method provided in this embodiment, when determining that the body kinetic degree of the target object is relatively high, for example, when determining that the moving speed of the target object is relatively high, the electronic device may determine that the body aesthetic degree of the target object is relatively high, that is, may determine that the target cropping manner corresponding to the original image is the body-first cropping manner. When determining that the body kinetic degree of the target object is relatively low, for example, when determining that the moving speed of the target object is relatively low (for example, in a stationary state), the electronic device may determine that the body aesthetic degree of the target object is relatively low, that is, may determine that the target cropping manner corresponding to the original image is the face-first cropping manner. When determining that the body kinetic degree of the target object is moderate, the electronic device may determine that the body aesthetic degree of the target object is moderate, that is, may determine that the target cropping manner corresponding to the original image is a default cropping manner.

It should be understood that, in this embodiment of this application, that the body aesthetic degree is relatively high and the body aesthetic degree is high may be a same concept, and that the body aesthetic degree is relatively low and the body aesthetic degree is low may be a same concept. The default cropping manner may be specifically determined based on an actual scenario. For example, it may be determined, based on an actual scenario, that the default cropping manner is the face-first cropping manner. For example, it may be determined, based on an actual scenario, that the default cropping manner is that a facial center of the target object is located in the upper 1/3 of the cropped image, that is, the cropped image may be divided into three equal parts from top to bottom, and the facial center of the target object may be located in the upper 1/3.

In an example, determining the body kinetic degree of the target object may include:
obtaining a first angle corresponding to the target object, where the first angle is an angle between a vertical direction and a connection line between a top of a head and a midpoint of a pelvis of the target object; and
determining the body kinetic degree of the target object based on the first angle.

In the image cropping method provided in this example, the electronic device may determine the body kinetic degree of the target object based on the first angle (namely, an angle a) between the connection line between the top of the target object and the midpoint of the pelvis and the vertical direction, for example, may determine the angle a as the body kinetic degree of the target object. When the target object is in a moving state, the angle a is usually large, and a higher moving speed indicates a larger angle a. When the target object is in the stationary state, the angle a is usually small.

In a possible implementation, determining the body aesthetic degree of the target object based on the body kinetic degree may include:
when the body kinetic degree is greater than or equal to a first threshold, determining that the body aesthetic degree of the target object meets a first condition; or
when the body kinetic degree is less than a second threshold, determining that the body aesthetic degree of the target object meets a second condition, where the first threshold is greater than or equal to the second threshold.

It should be understood that the first condition may be that the body aesthetic degree is high, and the second condition may be that the body aesthetic degree is low.

In the image cropping method provided in this implementation, when the target object is in the moving state, the angle a is greater than or equal to the first threshold (namely, a threshold A1). When the target object is in the stationary state, the angle a is less than the second threshold (namely, a threshold A2). The threshold A1 and the threshold A2 may be specific values, or may be value ranges. The threshold A1 and the threshold A2 may be the same or different, and the threshold A1 is greater than or equal to the threshold A2. In other words, when determining that the body kinetic degree is greater than or equal to the first threshold (namely, the threshold A1), the electronic device may determine that the body aesthetic degree of the target object is high. When determining that the body kinetic degree is less than the second threshold (namely, the threshold A2), the electronic device may determine that the body aesthetic degree of the target object is low. When determining that the body kinetic degree is greater than or equal to the second threshold and less than the first threshold, the electronic device may determine that the body aesthetic degree of the target object is moderate.

In another possible implementation, determining the body aesthetic degree of the target object based on the body kinetic degree may include:
determining a body stretching degree of the target object, where the body stretching degree represents a stretching degree of a body of the target object; and
determining the body aesthetic degree of the target object based on the body kinetic degree and the body stretching degree.

In the image cropping method provided in this implementation, the electronic device may determine the body aesthetic degree of the target object based on the body kinetic degree and the body stretching degree of the target object, to determine the body aesthetic degree of the target object by comprehensively considering the body kinetic degree and the body stretching degree of the target object. This can improve accuracy of determining the body aesthetic degree, thereby improving accuracy of determining the target cropping manner, and improving aesthetics of the cropped image.

In an example, determining body aesthetic degree of the target object based on the body kinetic degree and the body stretching degree may include:
when the body kinetic degree is greater than or equal to a first threshold, and the body stretching degree is greater than or equal to a third threshold, determining that the body aesthetic degree of the target object meets a first condition; or
when the body kinetic degree is less than a second threshold, and the body stretching degree is less than a fourth threshold, determining that the body aesthetic degree of the target object meets a second condition.

The first threshold is greater than or equal to the second threshold, and the third threshold is greater than or equal to the fourth threshold.

It should be noted that the third threshold may be a threshold B1, or may be a threshold C1. The fourth threshold may be a threshold B2, or may be a threshold C2. The threshold B1 and the threshold B2, and the threshold C1 and the threshold C2 may be specific values, or may be value ranges. The threshold B1 and the threshold B2 may be the same or different, and the threshold B1 is greater than or equal to the threshold B2. The threshold C1 and the threshold C2 may be the same or different, and the threshold C1 is greater than or equal to the threshold C2.

In the image cropping method provided in this example, when determining that the body kinetic degree is greater than or equal to the first threshold (namely, the threshold A1) and that the body stretching degree is greater than or equal to the third threshold (namely, the threshold B1 or the threshold C1), the electronic device may determine that the body aesthetic degree of the target object is high. When determining that the body kinetic degree is less than the second threshold (namely, the threshold A2) and that the body stretching degree is less than the fourth threshold (namely, the threshold B2 or the threshold C2), the electronic device may determine that the body aesthetic degree of the target object is low. Otherwise, the electronic device may determine that the body aesthetic degree of the target object is moderate.

In another possible implementation, determining the body aesthetic degree of the target object based on the body kinetic degree may include:
determining a body twisting degree of the target object, where the body twisting degree represents a twisting degree of a body of the target object; and
determining the body aesthetic degree of the target object based on the body kinetic degree and the body twisting degree.

In the image cropping method provided in this implementation, the electronic device may determine the body aesthetic degree of the target object based on the body kinetic degree and the body twisting degree of the target object, to determine the body aesthetic degree of the target object by comprehensively considering the body kinetic degree and the body twisting degree of the target object. This can improve accuracy of determining the body aesthetic degree, thereby improving accuracy of determining the target cropping manner, and improving aesthetics of the cropped image.

In an example, determining body aesthetic degree of the target object based on the body kinetic degree and the body twisting degree may include:
when the body kinetic degree is greater than or equal to a first threshold, and the body twisting degree is greater than or equal to a fifth threshold, determining that the body aesthetic degree of the target object meets a first condition; or
when the body kinetic degree is less than a second threshold, and the body twisting degree is less than a sixth threshold, determining that the body aesthetic degree of the target object meets a second condition.

The first threshold is greater than or equal to the second threshold, and the fifth threshold is greater than or equal to the sixth threshold.

It should be noted that the fifth threshold may be a threshold D1. The sixth threshold may be a threshold D2. The threshold D1 and the threshold D2 may be specific values, or may be value ranges. The threshold D1 and the threshold D2 may be the same or different, and the threshold D1 is greater than or equal to the threshold D2.

In the image cropping method provided in this example, when determining that the body kinetic degree is greater than or equal to the first threshold (namely, the threshold A1) and that the body twisting degree is greater than or equal to the fifth threshold (namely, the threshold D1), the electronic device may determine that the body aesthetic degree of the target object is high. When determining that the body kinetic degree is less than the second threshold (namely, the threshold A2) and that the body twisting degree is less than the sixth threshold (namely, the threshold D2), the electronic device may determine that the body aesthetic degree of the target object is low. Otherwise, the electronic device may determine that the body aesthetic degree of the target object is moderate.

In another possible implementation, determining the body aesthetic degree of the target object based on the body kinetic degree may include:
determining a body stretching degree and a body twisting degree of the target object, and determining the body aesthetic degree of the target object based on the body kinetic degree, the body stretching degree, and the body twisting degree.

In the image cropping method provided in this implementation, the electronic device may determine the body aesthetic degree of the target object based on the body kinetic degree, the body stretching degree, and the body twisting degree of the target object, to determine the body aesthetic degree of the target object by comprehensively considering the body kinetic degree, the body stretching degree, and the body twisting degree of the target object. This can improve accuracy of determining the body aesthetic degree, thereby improving accuracy of determining the target cropping manner, and improving aesthetics of the cropped image.

In some other embodiments, determining the body aesthetic degree of the target object may include:
determining a body stretching degree of the target object; and
determining the body aesthetic degree of the target object based on the body stretching degree.

It should be noted that, when the body stretching degree is relatively high, that is, when a stretching degree of the body is relatively high, it is generally considered that the body aesthetic degree is relatively high. When the body stretching degree is relatively low, that is, when a stretching degree of the body is relatively low, it is generally considered that the body aesthetic degree is low. That is, the body aesthetic degree at a relatively high stretching degree is generally higher than the body aesthetic degree at a relatively low stretching degree.

In the image cropping method provided in this embodiment, when determining that the body stretching degree of the target object is relatively high, the electronic device may determine that the body aesthetic degree of the target object is relatively high, that is, may determine that the target cropping manner corresponding to the original image is the body-first cropping manner. When determining that the body stretching degree of the target object is relatively low, the electronic device may determine that the body aesthetic degree of the target object is relatively low, that is, may determine that the target cropping manner corresponding to the original image is the face-first cropping manner. When determining that the body stretching degree of the target object is moderate, the electronic device may determine that the body aesthetic degree of the target object is moderate, that is, may determine that the target cropping manner corresponding to the original image is a default cropping manner.

In an example, determining the body stretching degree of the target object may include:
determining a first width and a second width, where the first width is a width between first symmetric joint points of the target object, and the second width is a width between second symmetric joint points of the target object; and
determining the body stretching degree of the target object based on the first width and the second width.

For example, the first symmetric joint points may include group of joint points corresponding to shoulders and/or a group of joint points corresponding to a pelvis, and the second symmetric joint points may include at least one of a group of joint points corresponding to wrists, a group of joint points corresponding to knees, and a group of joint points corresponding to ankles.

In the image cropping method provided in this example, the electronic device may determine the body stretching degree of the target object based on a width between each group of symmetric joint points in at least two groups of symmetric joint points. It should be understood that, when the body stretching degree of the target object is higher, a difference between widths of at least two groups of symmetric joint points (namely, a width difference) of the target object is greater. When the body stretching degree of the target object is lower, a width difference of the target object is smaller.

It should be understood that each group of symmetric joint points may be joint points that are symmetric in a horizontal direction. That is, each group of symmetric joint points may include two joint points, and the two joint points are joint points that are symmetric in the horizontal direction. The width between each group of symmetric joint points may be a length of a connection line between the two joint points included in the group of symmetric joint points.

In another example, determining the body stretching degree of the target object may include:
determining a first horizontal coordinate and a second horizontal coordinate, where the first horizontal coordinate is a horizontal coordinate of a first target joint point of the target object, the second horizontal coordinate is a horizontal coordinate of a second target joint point of the target object, and the first target joint point and the second target joint point are joint points on a same side of the target object; and
determining the body stretching degree of the target object based on the first horizontal coordinate and the second horizontal coordinate.

For example, the first target joint point may include a joint point corresponding to a shoulder and/or a joint point corresponding to a pelvis, and the second target joint points may include at least one of a joint point corresponding to a wrist, a joint point corresponding to a knee, and a joint point corresponding to an ankle.

In the image cropping method provided in this example, the electronic device may determine the body stretching degree of the target object based on horizontal coordinates of at least two joint points on a single side. For example, when determining that a quantity of groups of symmetric joint points of the target object is less than 2, the electronic device may determine the body stretching degree of the target object based on horizontal coordinates of at least two joint points on a single side. When the body stretching degree of the target object is higher, a difference between horizontal coordinates of at least two joint points (namely, a horizontal coordinate difference) on a single side of the target object is larger. When the body stretching degree of the target object is lower, a horizontal coordinate difference on a single side of the target object is smaller.

In a possible implementation, determining the body aesthetic degree of the target object based on the body stretching degree may include:
when the body stretching degree is greater than or equal to a third threshold, determining that the body aesthetic degree of the target object meets a first condition; or
when the body stretching degree is less than a fourth threshold, determining that the body aesthetic degree of the target object meets a second condition, where the third threshold is greater than or equal to the fourth threshold.

In the image cropping method provided in this implementation, when determining that the body stretching degree is greater than or equal to the third threshold (namely, the threshold B1 or the threshold C1), the electronic device may determine that the body aesthetic degree of the target object is high. When determining that the body stretching degree is less than the fourth threshold (namely, the threshold B2 or the threshold C2), the electronic device may determine that the body aesthetic degree of the target object is low. When determining that the body kinetic degree is greater than or equal to the fourth threshold and less than the third threshold, the electronic device may determine that the body aesthetic degree of the target object is moderate.

In another possible implementation, determining the body aesthetic degree of the target object based on the body stretching degree may include:
determining a body twisting degree of the target object, and determining the body aesthetic degree of the target object based on the body stretching degree and the body twisting degree.

In the image cropping method provided in this implementation, the electronic device may determine the body aesthetic degree of the target object based on the body stretching degree and the body twisting degree of the target object, to determine the body aesthetic degree of the target object by comprehensively considering the body stretching degree and the body twisting degree of the target object. This can improve accuracy of determining the body aesthetic degree, thereby improving accuracy of determining the target cropping manner, and improving aesthetics of the cropped image.

In an example, determining body aesthetic degree of the target object based on the body stretching degree and the body twisting degree may include:
when the body stretching degree is greater than or equal to a third threshold, and the body twisting degree is greater than or equal to a fifth threshold, determining that the body aesthetic degree of the target object meets a first condition; or
when the body stretching degree is less than a fourth threshold, and the body twisting degree is less than a sixth threshold, determining that the body aesthetic degree of the target object meets a second condition.

The third threshold is greater than or equal to the fourth threshold, and the fifth threshold is greater than or equal to the sixth threshold.

In the image cropping method provided in this example, when determining that the body stretching degree is greater than or equal to the third threshold (namely, the threshold B1 or the threshold C1) and that the body twisting degree is greater than or equal to the fifth threshold (namely, the threshold D1), the electronic device may determine that the body aesthetic degree of the target object is high. When determining that the body stretching degree is less than the fourth threshold (namely, the threshold B2 or the threshold C2) and that the body twisting degree is less than the sixth threshold (namely, the threshold D2), the electronic device may determine that the body aesthetic degree of the target object is low. Otherwise, the electronic device may determine that the body aesthetic degree of the target object is moderate.

In some other embodiments, determining the body aesthetic degree of the target object may include:
determining a body twisting degree of the target object; and
determining the body aesthetic degree of the target object based on the body twisting degree.

It should be noted that, when the body twisting degree is relatively high, that is, when a twisting degree of the body is relatively high, it is generally considered that the body aesthetic degree is relatively high. When the body twisting degree is relatively low, that is, when a twisting degree of the body is relatively low, it is generally considered that the body aesthetic degree is low. That is, the body aesthetic degree at a relatively high twisting degree is generally higher than the body aesthetic degree at a relatively low twisting degree.

In the image cropping method provided in this embodiment, when determining that the body twisting degree of the target object is relatively high, the electronic device may determine that the body aesthetic degree of the target object is relatively high, that is, may determine that the target cropping manner corresponding to the original image is the body-first cropping manner. When determining that the body twisting degree of the target object is relatively low, the electronic device may determine that the body aesthetic degree of the target object is relatively low, that is, may determine that the target cropping manner corresponding to the original image is the face-first cropping manner. When determining that the body twisting degree of the target object is moderate, the electronic device may determine that the body aesthetic degree of the target object is moderate, that is, may determine that the target cropping manner corresponding to the original image is a default cropping manner.

In an example, determining the body twisting degree of the target object may include:
obtaining a second angle corresponding to the target object, where the second angle is an angle between a first connection line and a second connection line, the first connection line is a connection line corresponding to third symmetric joint points of the target object, and the second connection line is a connection line corresponding to fourth symmetric joint points of the target object; and
determining the body twisting degree of the target object based on the second angle.

For example, the third symmetric joint points may include a group of joint points corresponding to shoulders, and the fourth symmetric joint points may include a group of joint points corresponding to a pelvis.

In the image cropping method provided in this example, the electronic device may determine the body twisting degree of the target object based on the second angle (namely, an angle b) between the connection line between the group of joint points corresponding to the shoulders and the connection line between the group of joint points corresponding to the pelvis. For example, the angle b may be determined as the body twisting degree of the target object. When the body twisting degree of the target object is relatively large, the angle b is usually relatively large. When the body twisting degree of the target object is relatively small, the angle b is usually relatively small.

In a possible implementation, determining the body aesthetic degree of the target object based on the body twisting degree may include:
when the body twisting degree is greater than or equal to a fifth threshold, determining that the body aesthetic degree of the target object meets a first condition; or
when the body twisting degree is less than a sixth threshold, determining that the body aesthetic degree of the target object meets a second condition, where the fifth threshold is greater than or equal to the sixth threshold.

In the image cropping method provided in this implementation, when determining that the body twisting degree is greater than or equal to the fifth threshold (namely, the threshold D1), the electronic device may determine that the body aesthetic degree of the target object is high. When determining that the body twisting degree is less than the sixth threshold (namely, the threshold D2), the electronic device may determine that the body aesthetic degree of the target object is low. When determining that the body twisting degree is greater than or equal to the sixth threshold and less than the fifth threshold, the electronic device may determine that the body aesthetic degree of the target object is moderate.

In some embodiments, determining the facial aesthetic degree of the target object may include:
determining an expression arousal degree and an expression pleasantness degree of the target object, and determining the facial aesthetic degree of the target object based on the expression arousal degree and the expression pleasantness degree.

It should be understood that the facial aesthetic degree may include an expression aesthetic degree. The expression arousal degree may be used to measure a degree (or intensity) of an emotion. The expression pleasantness degree may be used to measure a positive degree of the emotion. In other words, the electronic device may determine the expression arousal degree and the expression pleasantness degree of the target object based on the original image, to determine the expression aesthetic degree of the target object based on the expression arousal degree and the expression pleasantness degree, so as to determine the facial aesthetic degree of the target object.

In a possible implementation, determining the facial aesthetic degree of the target object based on the expression arousal degree and the expression pleasantness degree may include:
when the expression arousal degree is greater than or equal to a seventh threshold, or the expression pleasantness degree is greater than or equal to an eighth threshold, determining that the facial aesthetic degree meets a third condition; or
when the expression arousal degree is less than the seventh threshold, and the expression pleasantness degree is less than the eighth threshold, determining that the facial aesthetic degree meets a fourth condition.

It should be understood that the third condition may mean that the facial aesthetic degree is high, and the fourth condition may mean that the facial aesthetic degree is low.

In the image cropping method provided in this implementation, when determining that an absolute value of the expression arousal degree is less than the seventh threshold (namely, a threshold E) and that an absolute value of the expression pleasantness degree is less than the eighth threshold (namely, a threshold F), the electronic device may determine that the facial aesthetic degree of the target object is relatively low, that is, may determine that a facial expression of the target object is plain. When determining that an absolute value of the expression arousal degree is greater than or equal to a threshold E or that an absolute value of the expression pleasantness degree is greater than or equal to a threshold F, the electronic device may determine that the facial aesthetic degree of the target object is relatively high, that is, may determine that a facial expression of the target object is expressive.

In some embodiments, determining, based on the body aesthetic degree and/or the facial aesthetic degree, the target cropping manner corresponding to the original image may include:
when the body aesthetic degree meets the first condition, determining that the target cropping manner is a first cropping manner, where the first cropping manner is a body-first cropping manner; or
when the body aesthetic degree meets the second condition, determining that the target cropping manner is a second cropping manner, where the second cropping manner is a face-first cropping manner.

In the image cropping method provided in this embodiment, the electronic device may determine, based on the body aesthetic degree, the target cropping manner corresponding to the original image. When the body aesthetic degree meets the first condition, that is, the body aesthetic degree is high, the electronic device may determine that the target cropping manner is the body-first cropping manner. When the body aesthetic degree meets the second condition, that is, the body aesthetic degree is low, the electronic device may determine that the target cropping manner is the face-first cropping manner. When the body aesthetic degree does not meet the first condition and does not meet the second condition, that is, the body aesthetic degree is moderate, the electronic device may determine that the target cropping manner is the default cropping manner.

In some other embodiments, determining, based on the body aesthetic degree and/or the facial aesthetic degree, the target cropping manner corresponding to the original image may include:
when the facial aesthetic degree meets the third condition, determining that the target cropping manner is a second cropping manner, where the second cropping manner is a face-first cropping manner; or
when the facial aesthetic degree meets the fourth condition, determining that the target cropping manner is a first cropping manner, where the first cropping manner is a body-first cropping manner.

In the image cropping method provided in this embodiment, the electronic device may determine, based on the facial aesthetic degree, the target cropping manner corresponding to the original image. When the facial aesthetic degree meets the third condition, that is, the facial aesthetic degree is high, the electronic device may determine that the target cropping manner is the face-first cropping manner. When the facial aesthetic degree meets the fourth condition, that is, the facial aesthetic degree is low, the electronic device may determine that the target cropping manner is the body-first cropping manner. When the facial aesthetic degree does not meet the third condition and does not meet the fourth condition, that is, the facial aesthetic degree is moderate, the electronic device may determine that the target cropping manner is the default cropping manner.

In some other embodiments, determining, based on the body aesthetic degree and/or the facial aesthetic degree, the target cropping manner corresponding to the original image may include:
when the body aesthetic degree meets the first condition, and the facial aesthetic degree meets the fourth condition, determining that the target cropping manner is a first cropping manner, where the first cropping manner is a body-first cropping manner; or
when the body aesthetic degree meets the first condition, and the facial aesthetic degree meets the third condition, or when the body aesthetic degree meets the second condition, determining that the target cropping manner is a second cropping manner, where the second cropping manner is a face-first cropping manner.

In the image cropping method provided in this embodiment, the electronic device may determine, based on the body aesthetic degree and the facial aesthetic degree, the target cropping manner corresponding to the original image. When the body aesthetic degree meets the first condition, and the facial aesthetic degree meets the fourth condition, that is, the body aesthetic degree is high and the facial aesthetic degree is low, the electronic device may determine that the target cropping manner is the body-first cropping manner. When the body aesthetic degree meets the first condition, and the facial aesthetic degree meets the third condition, that is, the body aesthetic degree is high, and the facial aesthetic degree is high, the electronic device may determine that the target cropping manner is the face-first cropping manner. When the body aesthetic degree meets the second condition, that is, the body aesthetic degree is low, the electronic device may determine that the target cropping manner is the face-first cropping manner. Otherwise, the electronic device may determine that the target cropping manner is the default cropping manner.

In some embodiments, cropping the original image in the target cropping manner, to obtain the cropped image may include:
determining a face orientation of the target object; and
determining a target position of the target object in the cropped image based on the face orientation of the target object, and cropping the original image in the target cropping manner based on the target position, to obtain the cropped image, where a position of the target object in the cropped image is the target position.

It should be understood that the face orientation of the target object may include forward, sideward, and backward. The frontward may mean that the original image includes the front of the face of the target object. The sideward may mean that the original image includes a side of the face of the target object. The backward may mean that the original image does not include the face of the target object.

In the image cropping method provided in this embodiment, the electronic device may determine the target position of the target object in the cropped image based on the face orientation of the target object, and may crop the original image in the target cropping manner based on the target position. This can improve aesthetics of the cropped image and user experience.

In a possible implementation, determining the target position of the target object in the cropped image based on the face orientation of the target object may include:
when the face orientation is forward or backward, determining that the target position of the target object in the cropped image is a middle position.

In the image cropping method provided in this implementation, when the face orientation of the target object is forward or backward, the electronic device may determine that the target position of the target object in the cropped image is the middle position, so that when the original image is cropped in the target cropping manner, the original image may be cropped in a manner in which the target object is located at the middle position of the cropped image. This can improve aesthetics of the cropped image and user experience.

In another possible implementation, determining the target position of the target object in the cropped image based on the face orientation of the target object may include:
when the face orientation is lateral, determining an offset distance of the target object based on a preset aspect ratio, where the preset aspect ratio is an aspect ratio corresponding to the cropped image, and the offset distance is a distance between the target position of the target object in the cropped image and a middle position of the cropped image; and
determining the target position of the target object in the cropped image based on the offset distance of the target object.

It should be understood that the aspect ratio may be a ratio of a length (namely, a length in a horizontal direction) to a width (namely, a width in a vertical direction). The offset distance may be a distance between the target position of the target object in the cropped image and the middle position of the cropped image.

In the image cropping method provided in this implementation, when the face orientation of the target object is lateral, the electronic device may determine the offset distance of the target object, to determine the target position of the target object in the cropped image based on the offset distance of the target object. Therefore, when the original image is cropped in the target cropping manner, the original image may be cropped in a manner in which the target object is located at the target position in the cropped image. This can improve aesthetics of the cropped image and user experience.

In an example, determining the target position of the target object in the cropped image based on the offset distance of the target object includes:
when the face orientation is lateral, determining an offset direction of the target object based on the face orientation; and
determining the target position of the target object in the cropped image based on the offset distance and the offset direction of the target object.

In the image cropping method provided in this example, when the face orientation of the target object is lateral, the electronic device may further determine the offset direction of the target object, to determine the target position of the target object in the cropped image based on the offset distance and the offset direction of the target object. Therefore, when the original image is cropped in the target cropping manner, the original image may be cropped in a manner in which the target object is located at the target position in the cropped image. This can improve aesthetics of the cropped image and user experience.

For example, when the face orientation of the target object is leftward, the electronic device may determine that the offset direction of the target object is rightward. That is, when determining that the face of the target object faces a left side, the electronic device determines that the target position of the target object in the cropped image may be biased toward a right side of the cropped image. When the face orientation of the target object is rightward, the electronic device may determine that the offset direction of the target object is leftward. When determining that the face of the target object faces a right side, the electronic device determines that the target position of the target object in the cropped image may be biased toward a left side of the cropped image.

According to a second aspect, an embodiment of this application provides an image cropping method, including:
obtaining an original image, where the original image includes a target object;
determining a body aesthetic degree of the target object;
determining, based on the body aesthetic degree, a target cropping manner corresponding to the original image, where when the body aesthetic degree is high, the target cropping manner is a body-first cropping manner, or when the body aesthetic degree is low, the target cropping manner is a face-first cropping manner; and
cropping the original image in the target cropping manner, to obtain a cropped image, where the cropped image includes all or a part of the target object, and when the target cropping manner is a body-first cropping manner, the cropped image includes all of the target object, or when the target cropping manner is a face-first cropping manner, the cropped image includes the part of the target object, where the part includes a face.

In the image cropping method provided above, after obtaining the original image including the target object, the electronic device may determine the body aesthetic degree of the target object. When determining that the body aesthetic degree of the target object is high, the electronic device may crop the original image in a cropping manner in which the body is preferentially retained, so that the relatively aesthetic body of the target object can be retained in the cropped image. This can improve aesthetics of the cropped image and user experience. When determining that the body aesthetic degree of the target object is low, the electronic device may crop the original image in a cropping manner in which the facial feature is highlighted, so that a proportion of the body with a relatively low aesthetic degree in the cropped image can be reduced. This can improve aesthetics of the cropped image and user experience.

It should be noted that the high body aesthetic degree and the low body aesthetic degree are relative concepts. The high body aesthetic degree and the low body aesthetic degree may be determined by setting a threshold. For example, when the body aesthetic degree is higher than a threshold, it may be considered that the body aesthetic degree is high. When the body aesthetic degree is lower than a threshold, it may be considered that the body aesthetic degree is low. The threshold may be a value, or may be a value range.

For example, when the body aesthetic degree is represented by using the body kinetic degree, and the body kinetic degree is represented by using the angle a, when the angle a is greater than or equal to a threshold A1, it may be considered that the body aesthetic degree is high. When the angle a is less than a threshold A2, it may be considered that the body aesthetic degree is low. When the angle a is greater than or equal to a threshold A2 and less than a threshold A1, it may be considered that the body aesthetic degree is moderate. It should be understood that when the body aesthetic degree is moderate, the electronic device may determine that the target cropping manner corresponding to the original image is a default cropping manner. The default cropping manner may be specifically determined based on an actual scenario.

In some embodiments, determining body aesthetic degree of the target object may include:
determining a body kinetic degree of the target object, where the body kinetic degree represents a motion status of the target object; and
determining the body aesthetic degree of the target object based on the body kinetic degree, where when the body kinetic degree is greater than or equal to a first threshold, the body aesthetic degree is high, or when the body kinetic degree is less than a second threshold, the body aesthetic degree is low, where the first threshold is greater than or equal to the second threshold.

In some other embodiments, determining the body aesthetic degree of the target object may include:
determining a body stretching degree of the target object, where the body stretching degree represents a stretching degree of a body of the target object; and
determining the body aesthetic degree of the target object based on the body stretching degree, where when the body stretching degree is greater than or equal to a third threshold, the body aesthetic degree is high, or when the body stretching degree is less than a fourth threshold, the body aesthetic degree is low, where the third threshold is greater than or equal to the fourth threshold.

In some other embodiments, determining the body aesthetic degree of the target object may include:
determining a body twisting degree of the target object, where the body twisting degree represents a twisting degree of a body of the target object; and
determining the body aesthetic degree of the target object based on the body twisting degree, where when the body twisting degree is greater than or equal to a fifth threshold, the body aesthetic degree is high, or when the body twisting degree is less than a sixth threshold, the body aesthetic degree is low, where the fifth threshold is greater than or equal to the sixth threshold.

It should be noted that, for specific content of determining the body aesthetic degree based on the body kinetic degree, the body stretching degree, or the body twisting degree, refer to related descriptions in the first aspect. Details are not described herein again. In addition, the electronic device may further determine the body aesthetic degree based on at least two of the body kinetic degree, the body stretching degree, or the body twisting degree. For specific content of determining the body aesthetic degree by the electronic device based on at least two of the body kinetic degree, the body stretching degree, or the body twisting degree, refer to the related descriptions in the first aspect. Details are not described herein again.

In some embodiments, cropping the original image in the target cropping manner, to obtain the cropped image may include:
determining a face orientation of the target object; and
determining a target position of the target object in the cropped image based on the face orientation of the target object, and cropping the original image in the target cropping manner based on the target position, to obtain the cropped image, where a position of the target object in the cropped image is the target position.

In a possible implementation, determining the target position of the target object in the cropped image based on the face orientation of the target object may include:
when the face orientation is forward or backward, determining that the target position of the target object in the cropped image is a middle position.

In a possible implementation, determining the target position of the target object in the cropped image based on the face orientation of the target object includes:
when the face orientation is lateral, determining an offset distance of the target object based on a preset aspect ratio, where the preset aspect ratio is an aspect ratio corresponding to the cropped image, and the offset distance is a distance between the target position of the target object in the cropped image and a middle position of the cropped image; and
determining the target position of the target object in the cropped image based on the offset distance of the target object.

It should be noted that, for specific content of determining the target position of the target object in the cropped image based on the face orientation of the target object, and cropping the original image in the target cropping manner based on the target position, refer to the related descriptions in the first aspect. Details are not described herein again. In addition, the electronic device may further determine, based on the body aesthetic degree and the facial aesthetic degree, the target cropping manner corresponding to the original image. For specific content of determining, by the electronic device, the target cropping manner corresponding to the original image based on the body aesthetic degree and the facial aesthetic degree, refer to the related descriptions in the first aspect. Details are not described herein again.

According to a third aspect, an embodiment of this application provides an image cropping apparatus. The apparatus may include:
an original image obtaining module, configured to obtain an original image, where the original image includes a target object;
an aesthetic degree determining module, configured to determine a body aesthetic degree of the target object, and/or determining a facial aesthetic degree of the target object;
a cropping manner determining module, configured to determine, based on the body aesthetic degree and/or the facial aesthetic degree, a target cropping manner corresponding to the original image; and
an image cropping module, configured to crop the original image in the target cropping manner, to obtain a cropped image, where the cropped image includes all or a part of the target object.

In some embodiments, the aesthetic degree determining module is specifically configured to: determine a body kinetic degree of the target object, where the body kinetic degree represents a motion status of the target object; and determine the body aesthetic degree of the target object based on the body kinetic degree.

In an example, the aesthetic degree determining module is further configured to: obtain a first angle corresponding to the target object, where the first angle is an angle between a vertical direction and a connection line between a top of a head and a midpoint of a pelvis of the target object; and determine the body kinetic degree of the target object based on the first angle.

In a possible implementation, the aesthetic degree determining module is further configured to: when the body kinetic degree is greater than or equal to a first threshold, determine that the body aesthetic degree of the target object meets a first condition; or when the body kinetic degree is less than a second threshold, determine that the body aesthetic degree of the target object meets a second condition, where the first threshold is greater than or equal to the second threshold.

In another possible implementation, the aesthetic degree determining module is further configured to: determine a body stretching degree of the target object, where the body stretching degree represents a stretching degree of a body of the target object; and determine the body aesthetic degree of the target object based on the body kinetic degree and the body stretching degree.

In an example, the aesthetic degree determining module is further configured to: when the body kinetic degree is greater than or equal to a first threshold, and the body stretching degree is greater than or equal to a third threshold, determine that the body aesthetic degree of the target object meets a first condition; or when the body kinetic degree is less than a second threshold, and the body stretching degree is less than a fourth threshold, determine that the body aesthetic degree of the target object meets a second condition, where the first threshold is greater than or equal to the second threshold, and the third threshold is greater than or equal to the fourth threshold.

In another possible implementation, the aesthetic degree determining module is further configured to: determine a body twisting degree of the target object, where the body twisting degree represents a twisting degree of a body of the target object; and determine the body aesthetic degree of the target object based on the body kinetic degree and the body twisting degree.

In an example, the aesthetic degree determining module is further configured to: when the body kinetic degree is greater than or equal to a first threshold, and the body twisting degree is greater than or equal to a fifth threshold, determine that the body aesthetic degree of the target object meets a first condition; or when the body kinetic degree is less than a second threshold, and the body twisting degree is less than a sixth threshold, determining that the body aesthetic degree of the target object meets a second condition. The first threshold is greater than or equal to the second threshold, and the fifth threshold is greater than or equal to the sixth threshold.

In another possible implementation, the aesthetic degree determining module is further configured to: determine a body stretching degree and a body twisting degree of the target object, and determine the body aesthetic degree of the target object based on the body kinetic degree, the body stretching degree, and the body twisting degree.

In some other embodiments, the aesthetic degree determining module is further configured to: determine a body stretching degree of the target object, and determine the body aesthetic degree of the target object based on the body stretching degree.

In an example, the aesthetic degree determining module is further configured to: determine a first width and a second width, where the first width is a width between first symmetric joint points of the target object, and the second width is a width between second symmetric joint points of the target object; and determine the body stretching degree of the target object based on the first width and the second width.

For example, the first symmetric joint points include group of joint points corresponding to shoulders and/or a group of joint points corresponding to a pelvis, and the second symmetric joint points include at least one of a group of joint points corresponding to wrists, a group of joint points corresponding to knees, and a group of joint points corresponding to ankles.

In another example, the aesthetic degree determining module is further configured to: determine a first horizontal coordinate and a second horizontal coordinate, where the first horizontal coordinate is a horizontal coordinate of a first target joint point of the target object, the second horizontal coordinate is a horizontal coordinate of a second target joint point of the target object, and the first target joint point and the second target joint point are joint points on a same side of the target object; and determine the body stretching degree of the target object based on the first horizontal coordinate and the second horizontal coordinate.

For example, the first target joint point includes a joint point corresponding to a shoulder and/or a joint point corresponding to a pelvis, and the second target joint points includes at least one of a joint point corresponding to a wrist, a joint point corresponding to a knee, and a joint point corresponding to an ankle.

In a possible implementation, the aesthetic degree determining module is further configured to: when the body stretching degree is greater than or equal to a third threshold, determine that the body aesthetic degree of the target object meets a first condition; or when the body stretching degree is less than a fourth threshold, determine that the body aesthetic degree of the target object meets a second condition, where the third threshold is greater than or equal to the fourth threshold.

In another possible implementation, the aesthetic degree determining module is further configured to: determine a body twisting degree of the target object, and determine the body aesthetic degree of the target object based on the body stretching degree and the body twisting degree.

In an example, the aesthetic degree determining module is further configured to: when the body stretching degree is greater than or equal to a third threshold, and the body twisting degree is greater than or equal to a fifth threshold, determine that the body aesthetic degree of the target object meets a first condition; or when the body stretching degree is less than a fourth threshold, and the body twisting degree is less than a sixth threshold, determining that the body aesthetic degree of the target object meets a second condition. The third threshold is greater than or equal to the fourth threshold, and the fifth threshold is greater than or equal to the sixth threshold.

In some other embodiments, the aesthetic degree determining module is further configured to: determine a body twisting degree of the target object, and determine the body aesthetic degree of the target object based on the body twisting degree.

In an example, the aesthetic degree determining module is further configured to: obtain a second angle corresponding to the target object, where the second angle is an angle between a first connection line and a second connection line, the first connection line is a connection line corresponding to third symmetric joint points of the target object, and the second connection line is a connection line corresponding to fourth symmetric joint points of the target object; and determine the body twisting degree of the target object based on the second angle.

For example, the third symmetric joint points include a group of joint points corresponding to shoulders, and the fourth symmetric joint points include a group of joint points corresponding to a pelvis.

In a possible implementation, the aesthetic degree determining module is further configured to: when the body twisting degree is greater than or equal to a fifth threshold, determine that the body aesthetic degree of the target object meets a first condition; or when the body twisting degree is less than a sixth threshold, determine that the body aesthetic degree of the target object meets a second condition, where the fifth threshold is greater than or equal to the sixth threshold.

In some embodiments, the aesthetic degree determining module is further configured to: determine an expression arousal degree and an expression pleasantness degree of the target object, and determine the facial aesthetic degree of the target object based on the expression arousal degree and the expression pleasantness degree.

In a possible implementation, the aesthetic degree determining module is further configured to: when the expression arousal degree is greater than or equal to a seventh threshold, or the expression pleasantness degree is greater than or equal to an eighth threshold, determine that the facial aesthetic degree meets a third condition; or when the expression arousal degree is less than the seventh threshold, and the expression pleasantness degree is less than the eighth threshold, determine that the facial aesthetic degree meets a fourth condition.

In some embodiments, the cropping manner determining module is specifically configured to: when the body aesthetic degree meets the first condition, determine that the target cropping manner is a first cropping manner, where the first cropping manner is a body-first cropping manner; or when the body aesthetic degree meets the second condition, determine that the target cropping manner is a second cropping manner, where the second cropping manner is a face-first cropping manner.

In some other embodiments, the cropping manner determining module is further configured to: when the facial aesthetic degree meets the third condition, determine that the target cropping manner is a second cropping manner, where the second cropping manner is a face-first cropping manner; or when the facial aesthetic degree meets the fourth condition, determine that the target cropping manner is a first cropping manner, where the first cropping manner is a body-first cropping manner.

In some other embodiments, the cropping manner determining module is further configured to: when the body aesthetic degree meets the first condition, and the facial aesthetic degree meets the fourth condition, determine that the target cropping manner is a first cropping manner, where the first cropping manner is a body-first cropping manner; or when the body aesthetic degree meets the first condition, and the facial aesthetic degree meets the third condition, or when the body aesthetic degree meets the second condition, determine that the target cropping manner is a second cropping manner, where the second cropping manner is a face-first cropping manner.

In some embodiments, the image cropping module is specifically configured to: determine a face orientation of the target object; and determine a target position of the target object in the cropped image based on the face orientation of the target object, and crop the original image in the target cropping manner based on the target position, to obtain the cropped image, where a position of the target object in the cropped image is the target position.

In a possible implementation, the image cropping module is further configured to: when the face orientation is forward or backward, determine that the target position of the target object in the cropped image is a middle position.

In another possible implementation, the image cropping module is configured to: when the face orientation is lateral, determine an offset distance of the target object based on a preset aspect ratio, where the preset aspect ratio is an aspect ratio corresponding to the cropped image, and the offset distance is a distance between the target position of the target object in the cropped image and a middle position of the cropped image; and determine the target position of the target object in the cropped image based on the offset distance of the target object.

In an example, the image cropping module is further configured to: when the face orientation is lateral, determine an offset direction of the target object based on the face orientation; and determine the target position of the target object in the cropped image based on the offset distance and the offset direction of the target object.

According to a fourth aspect, an embodiment of this application provides an image cropping apparatus. The apparatus may include:
an original image obtaining module, configured to obtain an original image, where the original image includes a target object;
an aesthetic degree determining module, configured to determine a body aesthetic degree of the target object;
a cropping manner determining module, configured to determine, based on the body aesthetic degree, a target cropping manner corresponding to the original image, where when the body aesthetic degree is high, the target cropping manner is a body-first cropping manner, or when the body aesthetic degree is low, the target cropping manner is a face-first cropping manner; and
an image cropping module, configured to crop the original image in the target cropping manner, to obtain a cropped image, where the cropped image includes all or a part of the target object, and when the target cropping manner is a body-first cropping manner, the cropped image includes all of the target object, or when the target cropping manner is a face-first cropping manner, the cropped image includes the part of the target object, where the part includes a face.

In some embodiments, the aesthetic degree determining module is specifically configured to: determine a body kinetic degree of the target object, where the body kinetic degree represents a motion status of the target object; and determine the body aesthetic degree of the target object based on the body kinetic degree, where when the body kinetic degree is greater than or equal to a first threshold, the body aesthetic degree is high, or when the body kinetic degree is less than a second threshold, the body aesthetic degree is low, where the first threshold is greater than or equal to the second threshold.

In some other embodiments, the aesthetic degree determining module is further configured to: determine a body stretching degree of the target object, where the body stretching degree represents a stretching degree of a body of the target object; and determine the body aesthetic degree of the target object based on the body stretching degree, where when the body stretching degree is greater than or equal to a third threshold, the body aesthetic degree is high, or when the body stretching degree is less than a fourth threshold, the body aesthetic degree is low, where the third threshold is greater than or equal to the fourth threshold.

In some other embodiments, the aesthetic degree determining module is further configured to: determine a body twisting degree of the target object, where the body twisting degree represents a twisting degree of a body of the target object; and determine the body aesthetic degree of the target object based on the body twisting degree, where when the body twisting degree is greater than or equal to a fifth threshold, the body aesthetic degree is high, or when the body twisting degree is less than a sixth threshold, the body aesthetic degree is low, where the fifth threshold is greater than or equal to the sixth threshold.

In some embodiments, the image cropping module is specifically configured to: determine a face orientation of the target object; and determine a target position of the target object in the cropped image based on the face orientation of the target object, and crop the original image in the target cropping manner based on the target position, to obtain the cropped image, where a position of the target object in the cropped image is the target position.

In a possible implementation, the image cropping module is further configured to: when the face orientation is forward or backward, determine that the target position of the target object in the cropped image is a middle position.

In a possible implementation, the image cropping module is further configured to: when the face orientation is lateral, determine an offset distance of the target object based on a preset aspect ratio, where the preset aspect ratio is an aspect ratio corresponding to the cropped image, and the offset distance is a distance between the target position of the target object in the cropped image and a middle position of the cropped image; and determine the target position of the target object in the cropped image based on the offset distance of the target object.

According to a fifth aspect, an embodiment of this application provides an electronic device, including a memory, a processor, and a computer program that is stored in the memory and that can be run on the processor. When the processor executes the computer program, the electronic device is enabled to implement the image cropping method according to any one of the implementations of the first aspect or the second aspect.

According to a sixth aspect, an embodiment of this application provides a computer-readable storage medium. The computer-readable storage medium stores a computer program. When the computer program is executed by a computer, the computer is enabled to implement the image cropping method according to any one of the implementations of the first aspect or the second aspect.

According to a seventh aspect, an embodiment of this application provides a computer program product. When the computer program product runs on an electronic device, the electronic device is enabled to perform the image cropping method according to any one of the implementations of the first aspect or the second aspect.

It may be understood that, for beneficial effects of the third aspect to the seventh aspect, refer to the related descriptions in the first aspect or the second aspect. Details are not described herein again.

### BRIEF DESCRIPTION OF DRAWINGS

FIG. 1 is an example diagram of image cropping;
FIG. 2 is a diagram of a structure of an electronic device to which an image cropping method is applicable according to an embodiment of this application;
FIG. 3 is a diagram of a software architecture to which an image cropping method is applicable according to an embodiment of this application;
FIG. 4 is a schematic flowchart of an image cropping method according to an embodiment of this application;
FIG. 5 is an example diagram of image cropping according to an embodiment of this application;
FIG. 6 is a schematic flowchart of determining, based on a body aesthetic degree of a target object, a target cropping manner corresponding to an original image according to an embodiment of this application;
FIG. 7 is a diagram of an angle a according to an embodiment of this application;
FIG. 8 is a diagram of symmetric joint points according to an embodiment of this application;
FIG. 9 is a diagram of joint points on a single side according to an embodiment of this application;
FIG. 10 is a diagram of an angle b according to an embodiment of this application;
FIG. 11 is a diagram 1 of an application scenario according to an embodiment of this application;
FIG. 12 is a schematic flowchart of determining, based on a facial aesthetic degree of a target object, a target cropping manner corresponding to an original image according to an embodiment of this application;
FIG. 13 is an example diagram of a correspondence between an expression category and both an expression arousal degree and an expression pleasantness degree;
FIG. 14 is a schematic flowchart of determining, based on a body aesthetic degree and a facial aesthetic degree of a target object, a target cropping manner corresponding to an original image according to an embodiment of this application;
FIG. 15 is a schematic flowchart of another image cropping method according to an embodiment of this application;
FIG. 16 is a diagram 2 of an application scenario according to an embodiment of this application;
FIG. 17 is a diagram of a relationship between a preset aspect ratio and an offset ratio corresponding to a target object according to an embodiment of this application; and
FIG. 18 is a diagram 3 of an application scenario according to an embodiment of this application.

### DESCRIPTION OF EMBODIMENTS

It should be understood that the term "include" when used in the specification and the appended claims of this application indicates the presence of the described feature, whole, step, operation, element, and/or component, but does not preclude the presence or addition of one or more other features, wholes, steps, operations, elements, components, and/or collections thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when", "once", "in response to determining", "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification and claims of this application, the terms "first", "second", "third", and the like are merely intended for a purpose of differentiated description, but shall not be understood as an indication or an implication of relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "have", and their variants all mean "include but are not limited to", unless otherwise specifically emphasized in another manner.

In addition, "a plurality of" mentioned in embodiments of this application should be interpreted as two or more.

Steps in an image cropping method provided in embodiments of this application are merely examples. Not all steps are mandatory steps, or not content in each piece of information or a message is mandatory. In a use process, the step or the content may be added or removed based on a requirement. In different embodiments, mutual reference is made to a same step or steps or messages having a same function in embodiments of this application.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to similar technical problems.

An electronic device like a mobile phone or a tablet computer generally has a function of automatically cropping an image, that is, may automatically crop the image in a default cropping manner. For example, when setting a screen saver or a lock screen image, a user may upload a personalized image. After obtaining the personalized image, the electronic device may automatically crop the personalized image in the default cropping manner to obtain a cropped image of a specified aspect ratio, and apply the cropped image to a screen saver, a lock screen, or the like. In this case, all images are cropped in the default cropping manner, and consequently, aesthetics of the images cannot be highlighted in cropped images, resulting in poor user experience.

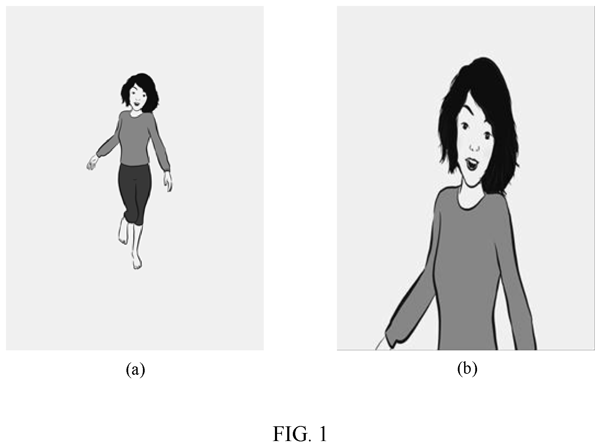

For example, FIG. 1 is an example diagram of image cropping.

During automatic image cropping, after obtaining an original image shown in (a) in FIG. 1, an electronic device may automatically crop the original image in a default cropping manner (for example, a face-first cropping manner), to obtain an image obtained through cropping, which is referred to as a cropped image for short, for example, obtain a cropped image shown in (b) in FIG. 1. That is, the electronic device crops the original image with a beautiful posture into a half-length image in the default cropping manner. As a result, the cropped image loses aesthetics of the original image, and user experience is poor. In some other cases, a posture of a person in the original image is restrained, but a full-length image is retained. As a result, an impact is insufficient, and user experience is poor.

To resolve the foregoing problem, embodiments of this application provide an image cropping method, an electronic device, and a computer-readable storage medium. In the method, during image cropping, an electronic device may obtain an original image including a target object, and may determine a body aesthetic degree of the target object and/or a facial aesthetic degree of the target object in the original image. Subsequently, the electronic device may determine, based on the body aesthetic degree and/or the facial aesthetic degree of the target object, a target cropping manner in which aesthetics of the original image can be highlighted, so that the original image can be cropped in the target cropping manner, to obtain a cropped image. In this way, the cropped image can highlight the aesthetics of the original image. This improves user experience, and implements strong usability and practicability.

In embodiments of this application, the electronic device may be an electronic device having an image cropping function, for example, a mobile phone, a tablet computer, a wearable device, a notebook computer, a smart large screen, or a desktop computer. A specific type of the electronic device is not limited in embodiments of this application.

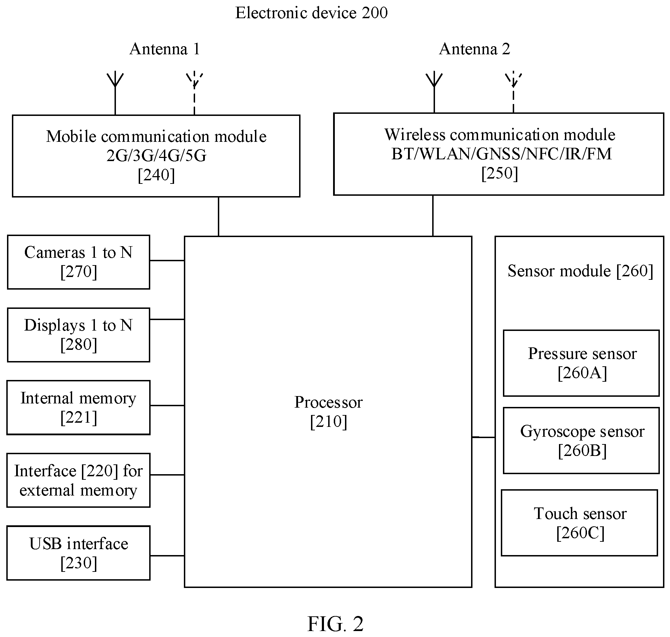

The following first describes the electronic device in embodiments of this application. FIG. 2 is a diagram of a structure of an electronic device 200.

The electronic device 200 may include a processor 210, an interface 220 for external memory, an internal memory 221, a universal serial bus (universal serial bus, USB) interface 230, an antenna 1, an antenna 2, a mobile communication module 240, a wireless communication module 250, a sensor module 260, a camera 270, a display 280, and the like. The sensor module 260 may include a pressure sensor 260A, a gyroscope sensor 260B, a touch sensor 260C, and the like.

It may be understood that the structure shown in this embodiment of this application does not constitute a specific limitation on the electronic device 200. In some other embodiments of this application, the electronic device 200 may include more or fewer components than those shown in the figure, or some components may be combined, or some components may be split, or there may be a different component arrangement. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU), and the like. Different processing units may be independent components, or may be integrated into one or more processors.

The controller may generate an operation control signal based on instruction operation code and a time sequence signal, to complete control of instruction fetching and instruction execution.

A storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor 210 may directly invoke the instructions or the data from the memory. This avoids repeated access and reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be separately coupled to the touch sensor 260C, the camera 270, and the like through different I2C bus interfaces. For example, the processor 210 may be coupled to the touch sensor 260C through the I2C interface, so that the processor 210 communicates with the touch sensor 260C through the I2C bus interface, to implement a touch function of the electronic device 200.

The 250250250 UART interface is a universal serial data bus, and is configured to perform asynchronous communication. The bus may be a two-way communication bus, and converts to-be-transmitted data between serial communication and parallel communication. In some embodiments, the UART interface is usually configured to connect the processor 210 to the wireless communication module 250. The MIPI interface may be configured to connect the processor 210 to a peripheral component like the display 280 or the camera 270. The MIPI interface includes a camera serial interface (camera serial interface, CSI), a display serial interface (display serial interface, DSI), and the like. In some embodiments, the processor 210 communicates with the camera 270 through the CSI interface, to implement an imaging shooting function of the electronic device 200. The processor 210 communicates with the display 280 through the DSI interface, to implement a display function of the electronic device 200.

The GPIO interface may be configured by using software. The GPIO interface may be configured as a control signal or a data signal. In some embodiments, the GPIO interface may be configured to connect the processor 210 to the camera 270, the display 280, the wireless communication module 250, the sensor module 260, or the like. The GPIO interface may alternatively be configured as the I2C interface, the I2S interface, the UART interface, the MIPI interface, or the like.

The USB interface 230 is an interface that conforms to a USB standard specification, and may be specifically a mini USB interface, a micro USB interface, a USB type-C interface, or the like. The USB interface 230 may be configured to perform data transmission between the electronic device 200 and a peripheral device, Alternatively, the interface may be configured to connect to another electronic device, for example, an AR device.

It may be understood that the interface connection relationship between the modules shown in this embodiment of this application is merely an example, and does not constitute a limitation on the structure of the electronic device 200. In some other embodiments of this application, the electronic device 200 may alternatively use an interface connection manner different from that in the foregoing embodiment, or a combination of a plurality of interface connection manners.

A wireless communication function of the electronic device 200 may be implemented through the antenna 1, the antenna 2, the mobile communication module 240, the wireless communication module 250, the modem processor, the baseband processor, and the like.

The antenna 1 and the antenna 2 are configured to: transmit and receive an electromagnetic wave signal. Each antenna in the electronic device 200 may be configured to cover one or more communication frequency bands. Different antennas may be further reused, to improve antenna utilization. For example, the antenna 1 may be reused as a diversity antenna in a wireless local area network. In other embodiments, the antenna may be used in combination with a tuning switch.

The mobile communication module 240 may provide a solution that is applied to the electronic device 200 and that includes wireless communication such as 2G, 3G, 4G, and 5G. The mobile communication module 240 may include at least one filter, a switch, a power amplifier, a low noise amplifier (low noise amplifier, LNA), and the like. The mobile communication module 240 may receive an electromagnetic wave through the antenna 1, perform filtering, amplification, and the like on the received electromagnetic wave, and transmit the electromagnetic wave to the modem processor for demodulation. The mobile communication module 240 may further amplify a signal obtained through modulation by the modem processor, and convert the signal into an electromagnetic wave through the antenna 1 for radiation. In some embodiments, at least some functional modules in the mobile communication module 240 may be disposed in the processor 210. In some embodiments, at least some functional modules of the mobile communication module 240 may be disposed in a same device with at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor displays an image or a video through the display 280. In some embodiments, the modem processor may be an independent component. In some other embodiments, the modem processor may be independent of the processor 210, and is disposed in a same device as the mobile communication module 240 or another functional module.

The wireless communication module 250 may provide a wireless communication solution that is applied to the electronic device 200, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 250 may be one or more components integrating at least one communication processing module. The wireless communication module 250 receives an electromagnetic wave through the antenna 2, performs frequency modulation and filtering on an electromagnetic wave signal, and sends a processed signal to the processor 210. The wireless communication module 250 may further receive a to-be-sent signal from the processor 210, perform frequency modulation and amplification on the to-be-sent signal, and convert, through the antenna 2, the signal into an electromagnetic wave for radiation.

In some embodiments, the antenna 1 and the mobile communication module 240 in the electronic device 200 are coupled, and the antenna 2 and the wireless communication module 250 in the electronic device 200 are coupled, so that the electronic device 200 can communicate with a network and another device by using a wireless communication technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 200 implements a display function through a GPU, the display 280, the application processor, and the like. The GPU is a microprocessor for image processing, and is connected to the display 280 and the application processor. The GPU is configured to: perform mathematical and geometric computation, and render an image. The processor 210 may include one or more GPUs that execute program instructions to generate or change displayed information.

The display 280 is configured to display an image, a video, and the like. The display 280 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), and the like. In some embodiments, the electronic device 200 may include one or N displays 280, where N is a positive integer greater than 1.

The electronic device 200 may implement an image shooting function through the ISP, the camera 270, the video codec, the GPU, the display 280, the application processor, and the like.

The ISP is configured to process data fed back by the camera 270. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 270.

The camera 270 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 270, where N is a positive integer greater than 1.

The digital signal processor is configured to process a digital signal. In addition to the digital image signal, the digital signal processor may further process another digital signal. For example, when the electronic device 200 selects a frequency, the digital signal processor is configured to perform Fourier transform on frequency energy and the like.

The video codec is configured to compress or decompress a digital video. The electronic device 200 may support one or more types of video codecs. In this way, the electronic device 200 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 200 may be implemented through the NPU, for example, image recognition, facial recognition, speech recognition, and text understanding.

The interface 220 for external memory may be configured to connect to an external memory card, for example, a micro SD card, to extend a storage capability of the electronic device 100. The external memory card communicates with the processor 210 through the interface 220 for external memory, to implement a data storage function. For example, files such as music and a video are stored in the external storage card.

The internal memory 221 may be configured to store computer-executable program code, and the executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the electronic device 200. In addition, the internal memory 221 may include a high-speed random access memory, or may include a nonvolatile memory, for example, at least one magnetic disk storage device, a flash memory, or a universal flash storage (universal flash storage, UFS). The processor 210 runs instructions stored in the internal memory 221 and/or instructions stored in the memory disposed in the processor, to perform various function applications and data processing of the electronic device 100.

The pressure sensor 260A is configured to sense a pressure signal, and can convert the pressure signal into an electrical signal. In some embodiments, the pressure sensor 260A may be disposed on the display 280. There are a plurality of types of pressure sensors 260A, such as a resistive pressure sensor, an inductive pressure sensor, and a capacitive pressure sensor. The capacitive pressure sensor may include at least two parallel plates made of conductive materials. When a force is applied to the pressure sensor 260A, capacitance between electrodes changes. The electronic device 200 determines pressure intensity based on the change of the capacitance. When a touch operation is performed on the display 280, the electronic device 200 detects intensity of the touch operation through the pressure sensor 260A. The electronic device 200 may also calculate a touch position based on a detection signal of the pressure sensor 260A. In some embodiments, touch operations that are performed in a same touch position but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on the icon of Messages, an instruction for creating an SMS message is executed.

The gyroscope sensor 260B may be configured to determine a moving posture of the electronic device 200. In some embodiments, an angular velocity of the electronic device 200 around three axes (namely, axes x, y, and z) may be determined through the gyroscope sensor 260B. The gyroscope sensor 260B may be configured to implement image stabilization during image shooting. For example, when the shutter is pressed, the gyroscope sensor 260B detects an angle at which the electronic device 200 jitters, calculates, based on the angle, a distance for which a lens module needs to compensate, and allows the lens to cancel the jitter of the electronic device 200 through reverse motion, to implement image stabilization. The gyroscope sensor 260B may be further used in a navigation scenario and a motion-controlled gaming scenario.

The touch sensor 260C is also referred to as a "touch component". The touch sensor 260C may be disposed on the display 280. The touch sensor 260C and the display 280 form a touchscreen, which is also referred to as a "touch screen". The touch sensor 260C is configured to detect a touch operation performed on or near the touch sensor 260C. The touch sensor may transfer the detected touch operation to the application processor, to determine a type of a touch event. A visual output related to the touch operation may be provided on the display 280. In some other embodiments, the touch sensor 260C may be alternatively disposed on a surface of the electronic device 200, and is located at a position different from that of the display 280.

A software system of the electronic device 200 may use a layered architecture, an event-driven architecture, a microkernel architecture, a micro service architecture, or a cloud architecture. For example, the software system of the electronic device 200 may use an Android operating system (Operating System, OS), a Harmony operating system (Harmony OS), or an iOS with a layered architecture. In embodiments of this application, an Android system with a layered architecture is used as an example to describe a software structure of the electronic device 200.

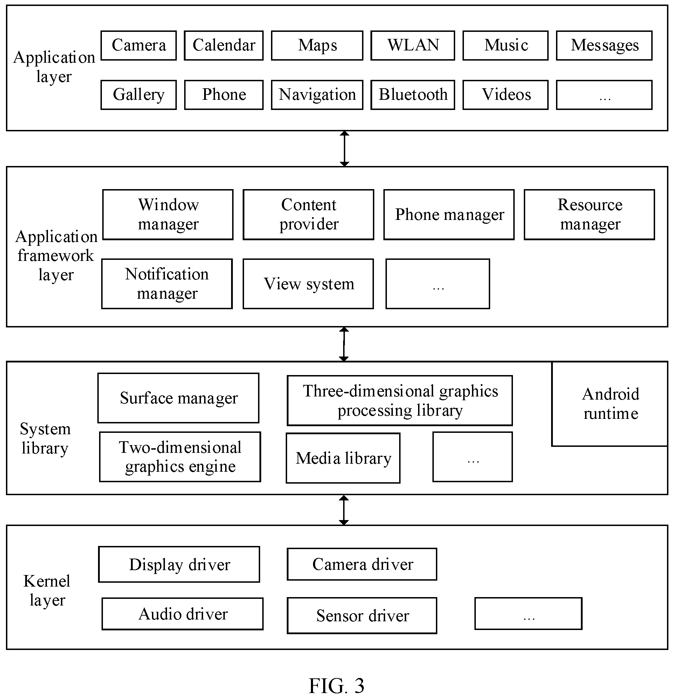

FIG. 3 is a block diagram of the software structure of the electronic device 200 according to embodiments of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are dialed and answered, a browsing history, a bookmark, a phone book, and the like.

The view system includes visual controls such as a control for displaying a text and a control for displaying a picture. The view system may be configured to construct an application. A display interface may include one or more views. For example, a display interface including a notification icon of Messages may include a text display view and an image display view.

The phone manager is configured to provide a communication function of the electronic device 200, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to: notify download completion, give a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert tone is made, the electronic device vibrates, or the indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes in detail the image cropping method provided in embodiments of this application with reference to the accompanying drawings and specific application scenarios.

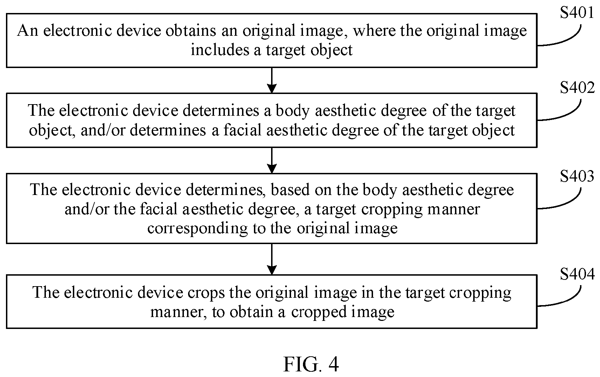

FIG. 4 is a schematic flowchart of an image cropping method according to an embodiment of this application. The method may be applied to an electronic device having an image cropping function, for example, a mobile phone, a tablet computer, or a notebook computer. The image cropping function may be a function of automatically cropping an image. The image cropping function may be a system function of the electronic device, or may be a function provided by an application installed on the electronic device. As shown in FIG. 4, the method may include the following steps.

S401: The electronic device obtains an original image, where the original image includes a target object.

S402: The electronic device determines a body aesthetic degree of the target object, and/or determines a facial aesthetic degree of the target object.

S403: The electronic device determines, based on the body aesthetic degree and/or the facial aesthetic degree, a target cropping manner corresponding to the original image.

S404: The electronic device crops the original image in the target cropping manner, to obtain a cropped image, where the cropped image includes all or a part of the target object.

In this embodiment of this application, after obtaining the original image including the target object, the electronic device may determine the body aesthetic degree and/or the facial aesthetic degree of the target object. Subsequently, the electronic device may determine, based on the body aesthetic degree and/or the facial aesthetic degree of the target object, a target cropping manner in which posture aesthetics and/or facial aesthetics of the target object can be highlighted, and may crop the original image in the target cropping manner, to obtain the cropped image, so that the posture aesthetics and/or the facial aesthetics of the original image can be retained in the cropped image. This can improve aesthetics of the cropped image and user experience.

It should be noted that the image cropping method provided in embodiments of this application may be used to crop the original image into a cropped image with a preset aspect ratio. Therefore, after obtaining the original image including the target object, the electronic device may determine an aspect ratio (which may be referred to as an original aspect ratio below) of the original image, and may determine, based on the original aspect ratio and the preset aspect ratio, whether the original image needs to be cropped. When the original image needs to be cropped, the electronic device may crop the original image by using the image cropping method provided in embodiments of this application. When the original image does not need to be cropped, the electronic device may not crop the original image.

For example, when the original aspect ratio is equal to the preset aspect ratio, the electronic device may determine that the original image does not need to be cropped, that is, the electronic device may not crop the original image. When the original aspect ratio is greater than the preset aspect ratio, the electronic device may determine that the original image needs to be cropped. In this case, the electronic device may crop the original image based on the preset aspect ratio, to obtain the cropped image. When the original aspect ratio is less than the preset aspect ratio, the electronic device may scale up the original image based on the preset aspect ratio, or may perform image padding on the original image based on the preset aspect ratio. If the aspect ratio of the original image after scaling up or image padding is greater than the preset aspect ratio, the electronic device may determine that the original image needs to be cropped. In this case, the electronic device may crop the original image after scaling up or image padding, to obtain the cropped image.

It should be understood that the preset aspect ratio may be determined based on an actual scenario. This is not limited in embodiments of this application.

For example, the preset aspect ratio may be an aspect ratio customized by a user. For example, in a scenario in which the original image is set as a screen saver or a lock screen image, the electronic device may determine the preset aspect ratio based on an aspect ratio of a screen of the electronic device. For example, the preset aspect ratio may be the aspect ratio of the screen of the electronic device. The following uses an example in which the preset aspect ratio is the aspect ratio of the screen of the electronic device for description.

For example, the original image may be an image captured by the electronic device, for example, an image captured by a camera of the electronic device. Alternatively, the original image may be an image received by the electronic device. The original image may be a to-be-cropped image selected by the user. For example, when setting the screen saver or the lock screen image, the user may select an image. The electronic device may crop the image selected by the user, and may apply an obtained cropped image to the screen saver, the lock screen, or the like. For example, the user may further use the solution provided in embodiments of this application when setting a profile picture.

It should be noted that the image cropping method provided in embodiments of this application may be used to crop the image including the target object. To be specific, after obtaining the original image, the electronic device may determine whether the original image includes the target object. When determining that the original image includes the target object, the electronic device may crop the original image by using the image cropping method provided in embodiments of this application. When determining that the original image does not include the target object, the electronic device may crop the original image by using another image cropping method.

It should be understood that another image cropping method may be determined based on an actual scenario. This is not limited in embodiments of this application. In addition, a specific manner in which the electronic device determines whether the original image includes the target object may be determined based on an actual scenario. This is not limited in embodiments of this application. For example, the electronic device may perform target detection on the original image by using an existing target detection network or a target detection algorithm, to determine whether the original image includes the target object.

In some embodiments, the target object may be a portrait. The portrait may be an image of a person. In other words, the image cropping method provided in embodiments of this application may be used to crop an image including a portrait. For example, after obtaining the original image, the electronic device may determine whether the original image includes a portrait. When determining that the original image includes the portrait, the electronic device may crop the original image by using the image cropping method provided in embodiments of this application. When determining that the original image does not include the portrait, the electronic device may crop the original image by using another image cropping method.

It should be noted that a specific manner in which the electronic device determines whether the original image includes the portrait is not limited in embodiments of this application, and may be determined based on an actual scenario. For example, the electronic device may determine, by using a face detection network, whether the original image includes the portrait. For example, the electronic device may determine, by using a body detection network, whether the original image includes the portrait.

In some other embodiments, the target object may alternatively be an animal, or another object having a face and/or a body movement, for example, a sculpture or a paint.

In some embodiments, the target cropping manner may be a body-first cropping manner, or may be a face-first cropping manner. The body-first cropping manner may mean that during image cropping, a body may be a factor that is preferentially considered, that is, retaining integrity of the body may be a factor that is preferentially considered to be retained. The face-first cropping manner may mean that during image cropping, a face may be a factor that is preferentially considered, that is, highlighting a facial feature may be a factor that is preferentially considered.

In other words, when determining that the target cropping manner is the body-first cropping manner, and when cropping the original image in the target cropping manner, the electronic device may preferentially retain the integrity of the body, for example, may crop the original image into a full-length image. When determining that the target cropping manner is the face-first cropping manner, and when cropping the original image in the target cropping manner, the electronic device may preferentially highlight the facial feature, for example, may crop the original image into a half-length image in which the facial feature is highlighted.

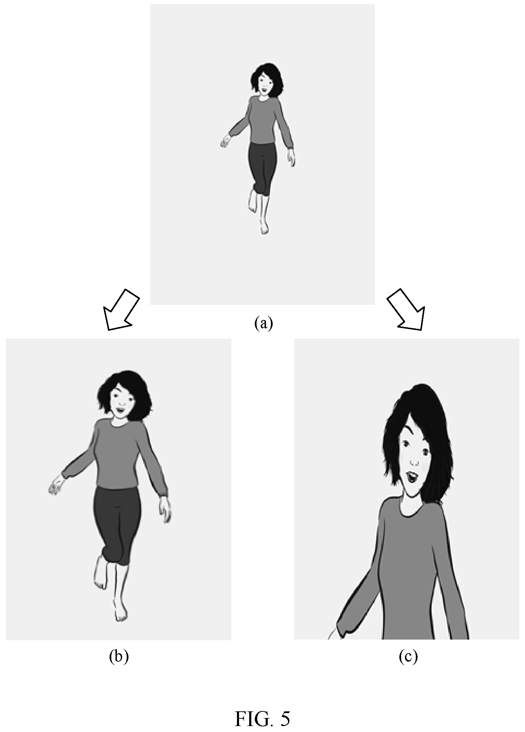

For example, FIG. 5 is an example diagram of image cropping according to an embodiment of this application.

When the original image shown in (a) in FIG. 5 is cropped in the body-first cropping manner, the electronic device may preferentially retain the integrity of the body of the target object. For example, the electronic device may crop the original image into the full-length image shown in (b) in FIG. 5, to retain the entire body of the target object.

When the original image shown in (a) in FIG. 5 is cropped in the face-first cropping manner, the electronic device may highlight the facial feature of the target object. For example, the electronic device may crop the original image to the half-length image shown in (c) in FIG. 5, to highlight the facial feature of the target object.

In some embodiments, the original image may include one or more target objects. That is, after obtaining the original image, the electronic device may determine a quantity of target objects included in the original image.

When the original image includes one target object, the electronic device may determine a body aesthetic degree and/or a facial aesthetic degree of the target object, and may determine, based on the body aesthetic degree and/or the facial aesthetic degree of the target object, the target cropping manner corresponding to the original image, to crop the original image in the target cropping manner.

When the original image includes a plurality of target objects, the electronic device may separately determine body aesthetic degrees and/or facial aesthetic degrees of the target objects. That is, for each target object, the electronic device may determine a body aesthetic degree and/or a facial aesthetic degree of the target object. Subsequently, the electronic device may determine, based on the body aesthetic degrees and/or the facial aesthetic degrees of the target objects, a target object (for example, a target object T) with a highest body aesthetic degree and/or a highest facial aesthetic degree, and may determine, based on the body aesthetic degree and/or the facial aesthetic degree of the target object T, the target cropping manner corresponding to the original image, to crop the original image in the target cropping manner. That is, when the original image includes the plurality of target objects, the electronic device may crop the original image based on the target object T with the highest body aesthetic degree and/or the highest facial aesthetic degree. The body aesthetic degree may indicate aesthetics of a body action, that is, may indicate aesthetics of a posture. The facial aesthetic degree may indicate aesthetics of a facial expression.

In some other embodiments, the solution provided in this embodiment of this application may be used only when there is one target object, and another type of cropping manner, for example, a cropping manner of highlighting a group portrait, may be used when there are a plurality of target objects.

The following uses an example in which the original image includes one target object to describe a process in which the electronic device determines a body aesthetic degree and/or a facial aesthetic degree of the target object, and determines, based on the body aesthetic degree and/or the facial aesthetic degree of the target object, the target cropping manner corresponding to the original image.

It can be learned from the foregoing descriptions that, after obtaining the original image including one target object, the electronic device may determine a body aesthetic degree of the target object, and may determine, based on the body aesthetic degree of the target object, the target cropping manner corresponding to the original image. Alternatively, the electronic device may determine a facial aesthetic degree of the target object, and may determine, based on the facial aesthetic degree of the target object, the target cropping manner corresponding to the original image. Alternatively, the electronic device may determine a body aesthetic degree and a facial aesthetic degree of the target object, and may determine, based on the body aesthetic degree and the facial aesthetic degree of the target object, the target cropping manner corresponding to the original image.

The following separately describes the following cases: 1. The electronic device determines the body aesthetic degree of the target object, and determines, based on the body aesthetic degree of the target object, the target cropping manner corresponding to the original image. 2. The electronic device determines the facial aesthetic degree of the target object, and determines, based on the facial aesthetic degree of the target object, the target cropping manner corresponding to the original image. 3. The electronic device determines the body aesthetic degree and the facial aesthetic degree of the target object, and determines, based on the body aesthetic degree and the facial aesthetic degree of the target object, the target cropping manner corresponding to the original image.
**1.** **The electronic device determines the body aesthetic degree** of **the target object, and determines, based on the body aesthetic degree of the target object, the target cropping manner corresponding to the original image.**

After obtaining the original image including the target object, the electronic device may determine the body aesthetic degree of the target object based on the original image. When determining that the body aesthetic degree of the target object is relatively high, the electronic device may determine that the target cropping manner corresponding to the original image is the body-first cropping manner. When determining that the body aesthetic degree of the target object is relatively low, the electronic device may determine that the target cropping manner corresponding to the original image is the face-first cropping manner.

That is, during cropping of the original image, when determining that the body aesthetic degree of the target object is relatively high, the electronic device may crop the original image in a cropping manner in which the body is preferentially retained, so that the relatively aesthetic body of the target object can be retained in the cropped image. This can improve aesthetics of the cropped image and user experience. When determining that the body aesthetic degree of the target object is relatively low, the electronic device may crop the original image in a cropping manner in which the facial feature is highlighted, so that a proportion of the body with a relatively low aesthetic degree in the cropped image can be reduced. This can improve aesthetics of the cropped image and user experience.

It should be understood that, in this embodiment of this application, that the body aesthetic degree is relatively high and the body aesthetic degree is high may be a same concept, and that the body aesthetic degree is relatively low and the body aesthetic degree is low may be a same concept.

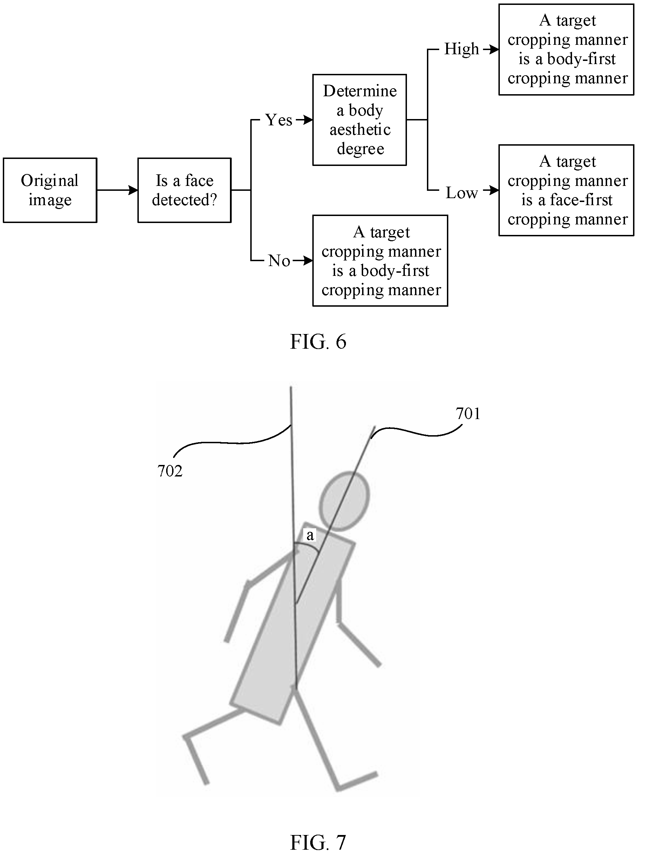

FIG. 6 is a schematic flowchart of determining, based on the body aesthetic degree of the target object, the target cropping manner corresponding to the original image according to an embodiment of this application.

In an example, as shown in FIG. 6, after obtaining the original image including the target object, the electronic device may detect whether the original image includes a face image. When no face image is detected in the original image, for example, when the original image is an image including a back view of the target object, the electronic device may directly determine that the target cropping manner corresponding to the original image is the body-first cropping manner. In other words, when the electronic device detects no face image in the original image, the electronic device may directly crop the original image in the body-first cropping manner.

When the face image is detected in the original image, the electronic device may determine the body aesthetic degree of the target object based on the original image. When determining that the body aesthetic degree of the target object is relatively high, the electronic device may determine that the target cropping manner corresponding to the original image is the body-first cropping manner. When determining that the body aesthetic degree of the target object is relatively low, the electronic device may determine that the target cropping manner corresponding to the original image is the face-first cropping manner.

It should be understood that a specific manner of detecting whether the original image includes a face is not limited in embodiments of this application, and may be specifically determined based on an actual scenario, for example, a general facial recognition algorithm or another artificial intelligence algorithm.

The following uses an example in which the original image includes the face image of the target object for description.

In this embodiment of this application, the electronic device may determine the body aesthetic degree of the target object based on at least one of a body kinetic degree, a body stretching degree, and a body twisting degree of the target object. The body kinetic degree may represent a moving state of the target object, for example, may represent a moving speed of the target object. The body stretching degree may represent a stretching degree of the body of the target object. The body twisting degree may represent a twisting degree of the body of the target object.

In some embodiments, the electronic device may determine the body aesthetic degree of the target object based on the body kinetic degree of the target object. To be specific, after obtaining the original image including the target object, the electronic device may determine the body kinetic degree of the target object based on the original image, and may determine the body aesthetic degree of the target object based on the body kinetic degree.

It should be noted that, it is found that people prefer images containing motion to static images. In other words, people generally consider that a body aesthetic degree of the target object in the moving state is higher than a body aesthetic degree of the target object in a stationary state.

In an example, when determining that the body kinetic degree of the target object is relatively high, for example, when determining that the moving speed of the target object is relatively high, the electronic device may determine that the body aesthetic degree of the target object is relatively high, that is, may determine that the target cropping manner corresponding to the original image is the body-first cropping manner. When determining that the body kinetic degree of the target object is relatively low, for example, when determining that the moving speed of the target object is relatively low (for example, in the stationary state), the electronic device may determine that the body aesthetic degree of the target object is relatively low, that is, may determine that the target cropping manner corresponding to the original image is the face-first cropping manner.

In a possible implementation, the electronic device may determine the body kinetic degree of the target object based on an angle (which may be referred to as an angle a below) between a vertical direction and a connection line between a top of a head and a midpoint of a pelvis.

For example, FIG. 7 is a diagram of the angle a according to an embodiment of this application.

As shown in FIG. 7, the angle a may be an angle between a connection line 701 between the top of the head and the midpoint of the pelvis and a straight line 702 in the vertical direction.

For example, the electronic device may determine the angle a as the body kinetic degree of the target object. Alternatively, a conversion relationship (which may be referred to as a conversion relationship R1 below) between the angle a and a body kinetic degree may be set on the electronic device, and the electronic device may determine the body kinetic degree of the target object based on the angle a and the conversion relationship R1. The conversion relationship R1 between the angle a and the body kinetic degree may be determined based on an actual scenario. This is not limited in embodiments of this application. The following uses an example in which the electronic device determines the angle a as the body kinetic degree of the target object for description.

It should be noted that, when the target object is in the moving state, the angle a is usually large, and a higher moving speed indicates a larger angle a. When the target object is in the stationary state, the angle a is usually small. That is, when the target object is in the moving state, the angle a is greater than or equal to a threshold (which may be referred to as a threshold A1 below). When the target object is in the stationary state, the angle a is less than a threshold (which may be referred to as a threshold A2 below).

It should be understood that the threshold A1 and the threshold A2 may be the same or may be different. The threshold A1 and the threshold A2 may be specific values, or may be value ranges. A specific value of the threshold A1 and a specific value of the threshold A2 may be specifically determined based on an actual scenario. This is not limited in embodiments of this application. For example, the threshold A1 and the threshold A2 may be determined based on the angle a when the target object and/or the another object are/is in the moving state. For example, it may be determined that the threshold A1 is any angle like 10 degrees, 15 degrees, or 20 degrees, or it may be determined that the threshold A2 is any angle like 0 degrees, 3 degrees, 5 degrees, or 10 degrees.

Optionally, the electronic device may determine the body aesthetic degree of the target object based on whether the body kinetic degree (namely, the angle a) is greater than or equal to the threshold A1 and/or based on whether the body kinetic degree (namely, the angle a) is less than or equal to the threshold A2.

In an example, when the threshold A1 is the same as the threshold A2, and when it is determined that the angle a is greater than or equal to the threshold A1, the electronic device may determine that the body kinetic degree of the target object is relatively high, that is, may determine that the body aesthetic degree of the target object is relatively high. In this case, the electronic device may determine that the target cropping manner corresponding to the original image is the body-first cropping manner. When determining that the angle a is less than the threshold A2, the electronic device may determine that the body kinetic degree of the target object is relatively low, that is, may determine that the body aesthetic degree of the target object is relatively low. In this case, the electronic device may determine that the target cropping manner corresponding to the original image is the face-first cropping manner.

In another example, when the threshold A1 is different from the threshold A2, and when it is determined that the angle a is greater than or equal to the threshold A1, the electronic device may determine that the body kinetic degree of the target object is relatively high, that is, may determine that the body aesthetic degree of the target object is relatively high. In this case, the electronic device may determine that the target cropping manner corresponding to the original image is the body-first cropping manner. When determining that the angle a is less than the threshold A2, the electronic device may determine that the body kinetic degree of the target object is relatively low, that is, may determine that the body aesthetic degree of the target object is relatively low. In this case, the electronic device may determine that the target cropping manner corresponding to the original image is the face-first cropping manner. When determining that the angle a is greater than or equal to the threshold A2 and the angle a is less than the threshold A1, the electronic device may determine that the body kinetic degree of the target object is moderate, that is, may determine that the body aesthetic degree of the target object is moderate. Being moderate may mean being located between relatively high and relatively low.

It should be understood that, when determining that the body aesthetic degree of the target object is moderate, the electronic device may determine that the target cropping manner corresponding to the original image is a default cropping manner. That is, when determining that the body aesthetic degree of the target object is moderate, the electronic device may crop the original image in the default cropping manner, to obtain the cropped image. The default cropping manner may be specifically determined based on an actual scenario. This is not limited in embodiments of this application. For example, the default cropping manner may be the face-first cropping manner. For example, the default cropping manner may be that a facial center of the target object is located in the upper 1/3 of the cropped image, that is, the cropped image may be divided into three equal parts from top to bottom, and the facial center of the target object may be located in the upper 1/3.

In some other embodiments, the electronic device may determine the body aesthetic degree of the target object based on the body stretching degree of the target object. To be specific, after obtaining the original image including the target object, the electronic device may determine the body stretching degree of the target object based on the original image, and may determine the body aesthetic degree of the target object based on the body stretching degree of the target object.

In an example, when determining that the body stretching degree of the target object is relatively high, the electronic device may determine that the body aesthetic degree of the target object is relatively high, that is, may determine that the target cropping manner corresponding to the original image is the body-first cropping manner. When determining that the body stretching degree of the target object is relatively low, the electronic device may determine that the body aesthetic degree of the target object is relatively low, that is, may determine that the target cropping manner corresponding to the original image is the face-first cropping manner.

In a possible implementation, the electronic device may determine the body stretching degree of the target object based on a width between each group of symmetric joint points in at least two groups of symmetric joint points. To be specific, after obtaining the original image including the target object, the electronic device may determine the at least two groups of symmetric joint points of the target object, and may determine the width between each group of symmetric joint points. Subsequently, the electronic device may determine the body stretching degree of the target object based on the width between each group of symmetric joint points.

It should be understood that each group of symmetric joint points may be joint points that are symmetric in a horizontal direction. That is, each group of symmetric joint points may include two joint points, and the two joint points are joint points that are symmetric in the horizontal direction. The width between each group of symmetric joint points may be a length of a connection line between the two joint points included in the group of symmetric joint points.

It should be noted that a manner of determining a width between symmetric joint points is not specifically limited in embodiments of this application, and may be determined based on an actual scenario. For example, an image coordinate system may be established by using an upper left vertex or a center point of the original image as an origin, and coordinates of the symmetric joint points in the image coordinate system may be determined, to determine the width between the symmetric joint points based on the coordinates of the symmetric joint points in the image coordinate system.

In an example, the at least two groups of symmetric joint points may include symmetric joint points M and symmetric joint points N. The symmetric joint points M may be symmetric joint points whose width can change within a relatively small range. The symmetric joint points N may be symmetric joint points whose width can change within a relatively large range.

For example, the symmetric joint points M may include a group of joint points corresponding to shoulders (namely, a joint point corresponding to a left shoulder and a joint point corresponding to a right shoulder) and/or a group of joint points corresponding to a pelvis (namely, a joint point corresponding to a leftmost side of the pelvis and a joint point corresponding to a rightmost side of the pelvis). That is, the symmetric joint points M may include the joint point corresponding to the left shoulder and the joint point corresponding to the right shoulder, and/or may include the joint point corresponding to the leftmost side of the pelvis and the joint point corresponding to the rightmost side of the pelvis.

For example, the symmetric joint points N may include at least one of a group of joint points corresponding to wrists (namely, a joint point corresponding to a left wrist and a joint point corresponding to a right wrist), a group of joint points corresponding to knees (namely, a joint point corresponding to a left knee and a joint point corresponding to a right knee), and a group of joint points corresponding to ankles (namely, a joint point corresponding to a left ankle and a joint point corresponding to a right ankle).

To be specific, after obtaining the original image including the target object, the electronic device may determine the symmetric joint points M and the symmetric joint points N of the target object, and may determine a width between the symmetric joint points M and a width between the symmetric joint points N. Then, the electronic device may determine the body stretching degree of the target object based on the width between the symmetric joint points M and the width between the symmetric joint points N.

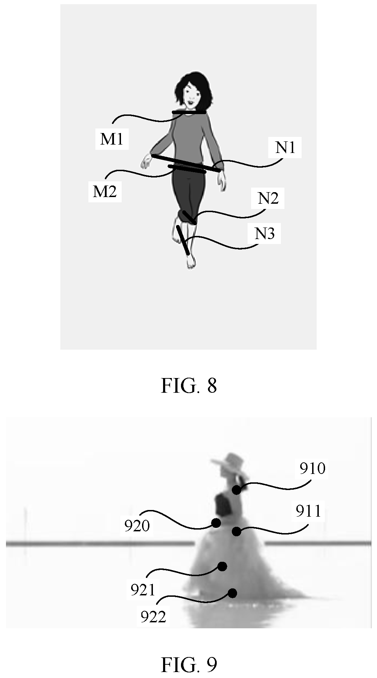

FIG. 8 is a diagram of symmetric joint points according to an embodiment of this application.

As shown in FIG. 8, when the symmetric joint points M include a group of joint points corresponding to the shoulders, and the symmetric joint points N include a group of joint points corresponding to the wrists, after obtaining the original image including the target object, the electronic device may determine, based on the original image, a width (which may be referred to as a width M1 below) between the joint point corresponding to the left shoulder and the joint point corresponding to the right shoulder. In addition, the electronic device may further determine, based on the original image, a width (which may be referred to as a width N1 below) between the joint point corresponding to the left wrist and the joint point corresponding to the right wrist. Then, the electronic device may determine the body stretching degree of the target object based on the width M1 and the width N1.

As shown in FIG. 8, when the symmetric joint points M include a group of joint points corresponding to the shoulders and a group of joint points corresponding to the pelvis, and the symmetric joint points N include a group of joint points corresponding to the wrists, after obtaining the original image including the target object, the electronic device may determine, based on the original image, the width M1 between the joint point corresponding to the left shoulder and the joint point corresponding to the right shoulder, and a width (which may be referred to as a width M2 below) between the joint point corresponding to the leftmost side of the pelvis and the joint point corresponding to the rightmost side of the pelvis. In addition, the electronic device may further determine, based on the original image, the width N1 between the joint point corresponding to the left wrist and the joint point corresponding to the right wrist. Then, the electronic device may determine the body stretching degree of the target object based on the width M1, the width M2, and the width N1.

As shown in FIG. 8, when the symmetric joint points M include a group of joint points corresponding to the shoulders and a group of joint points corresponding to the pelvis, and the symmetric joint points N include a group of joint points corresponding to the wrists, a group of joint points corresponding to the knees, and a group of joint points corresponding to the ankles, after obtaining the original image including the target object, the electronic device may determine, based on the original image, the width M1 between the joint point corresponding to the left shoulder and the joint point corresponding to the right shoulder, and the width M2 between the joint point corresponding to the leftmost side of the pelvis and the joint point corresponding to the rightmost side of the pelvis. In addition, the electronic device may further determine, based on the original image, the width N1 between the joint point corresponding to the left wrist and the joint point corresponding to the right wrist, a width (which may be referred to as a width N2 below) between the joint point corresponding to the left knee and the joint point corresponding to the right knee, and a width (which may be referred to as a width N3 below) between the joint point corresponding to the left ankle and the joint point corresponding to the right ankle. Then, the electronic device may determine the body stretching degree of the target object based on the width M1, the width M2, the width N1, the width N2, and the width N3.

It should be noted that a manner of determining the symmetric joint points by the electronic device is not specifically limited in embodiments of this application, and may be determined based on an actual scenario.

It should be understood that, when the body stretching degree of the target object is higher, a difference between widths of at least two groups of symmetric joint points (the difference between the widths of the at least two groups of symmetric joint points may be referred to as a width difference below) of the target object is greater. When the body stretching degree of the target object is lower, a width difference of the target object is smaller.

In an example, the electronic device may determine the body stretching degree of the target object based on the width difference of the target object, to determine the body aesthetic degree of the target object based on the width difference of the target object.

For example, the electronic device may determine the width difference of the target object as the body stretching degree of the target object. Alternatively, a conversion relationship (which may be referred to as a conversion relationship R2 below) between the width difference and the body stretching degree may be set on the electronic device, and the electronic device may determine the body stretching degree of the target object based on the width difference and the conversion relationship R2. The conversion relationship R2 between the width difference and the body stretching degree may be specifically determined based on an actual scenario. This is not limited in embodiments of this application. The following uses an example in which the electronic device determines the width difference as the body stretching degree of the target object for description.

For example, the electronic device may determine the body aesthetic degree of the target object based on whether the width difference of the target object is greater than or equal to a threshold (which may be referred to as a threshold B1 below) and/or whether the width difference of the target object is less than a threshold (which may be referred to as a threshold B2 below).

It should be noted that the threshold B1 and the threshold B2 may be the same or may be different. The threshold B1 and the threshold B2 may be specific values, or may be value ranges. A specific value of the threshold B1 and a specific value of the threshold B2 may be specifically determined based on an actual scenario. This is not limited in embodiments of this application. For example, the threshold B1 and the threshold B2 may be determined based on a width between the symmetric joint points M and a width between the symmetric joint points N when the body stretching degree of the target object and/or a body stretching degree of the another object are/is relatively high, and a width between the symmetric joint points M and a width between the symmetric joint points N when the body stretching degree of the target object and/or the body stretching degree of the another object are/is relatively low.

In an example, when the threshold B1 is the same as the threshold B2, and when it is determined that the width difference of the target object is greater than or equal to the threshold B1, the electronic device may determine that the body stretching degree of the target object is relatively high, that is, may determine that the body aesthetic degree of the target object is relatively high. In this case, the electronic device may determine that the target cropping manner corresponding to the original image is the body-first cropping manner. When determining that the width difference of the target object is less than the threshold B2, the electronic device may determine that the body stretching degree of the target object is relatively low, that is, may determine that the body aesthetic degree of the target object is relatively low. In this case, the electronic device may determine that the target cropping manner corresponding to the original image is the face-first cropping manner.

In another example, when the threshold B1 is different from the threshold B2, and when it is determined that the width difference of the target object is greater than or equal to the threshold B1, the electronic device may determine that the body stretching degree of the target object is relatively high, that is, may determine that the body aesthetic degree of the target object is relatively high. In this case, the electronic device may determine that the target cropping manner corresponding to the original image is the body-first cropping manner. When determining that the width difference of the target object is less than the threshold B2, the electronic device may determine that the body stretching degree of the target object is relatively low, that is, may determine that the body aesthetic degree of the target object is relatively low. In this case, the electronic device may determine that the target cropping manner corresponding to the original image is the face-first cropping manner. When determining that the width difference of the target object is greater than or equal to the threshold B2 and determining that the width difference of the target object is less than the threshold B1, the electronic device may determine that the body stretching degree of the target object is moderate, that is, may determine that the body aesthetic degree of the target object is moderate.

It should be understood that, when determining that the body aesthetic degree of the target object is moderate, the electronic device may determine that the target cropping manner corresponding to the original image is a default cropping manner. For specific content of the default cropping manner, refer to related content of the default cropping manner that is in the target cropping manner corresponding to the original image and that is determined based on the body kinetic degree of the target object. Details are not described herein again.

In an example, when the at least two groups of symmetric joint points include two groups of symmetric joint points, the electronic device may determine a width difference based on a value of a difference between widths. For example, the electronic device may determine the value of the difference between the widths of the two groups of symmetric joint points, and may determine the difference value as the width difference.

In another example, when the at least two groups of symmetric joint points include three or more groups of symmetric joint points, the electronic device may determine a width difference based on an average value of values of differences between widths. For example, the electronic device may separately determine a value of a difference between widths of any two groups of symmetric joint points, and may determine an average value based on all difference values, to determine the average value as the width difference.

In another example, when the at least two groups of symmetric joint points include three or more groups of symmetric joint points, the electronic device may determine a width difference based on a variance or a standard deviation of widths. For example, the electronic device may determine the widths of the groups of symmetric joint points, and may determine the variance or the standard deviation of the widths based on the widths of the groups of symmetric joint points, to determine the variance or the standard deviation of the widths as the width difference.

It should be noted that a specific value of the threshold B1 and a specific value of the threshold B2 in different scenarios may be determined based on an actual scenario. Thresholds B1 in different scenarios may be the same or different, and thresholds B2 in different scenarios may be the same or different. To be specific, the threshold B1 in the scenario in which the width difference is determined based on the value of the difference between the widths, the threshold B1 in the scenario in which the width difference is determined based on the average value of the values of the differences between the widths, and the threshold B1 in the scenario in which the width difference is determined based on the variance or standard deviation of the widths may be the same or may be different. Similarly, the threshold B2 in the scenario in which the width difference is determined based on the value of the difference between the widths, the threshold B2 in the scenario in which the width difference is determined based on the average value of the values of the differences between the widths, and the threshold B2 in the scenario in which the width difference is determined based on the variance or standard deviation of the widths may be the same or may be different.

In an example, the electronic device may further determine a distance between two eyes of the target object (for example, a distance between a center point of a left eye and a center point of a right eye) based on the original image. When the body stretching degree of the target object is determined based on the widths of the at least two groups of symmetric joint points, for each group of symmetric joint points, after determining the width between the group of symmetric joint points, the electronic device may normalize the width between the group of symmetric joint points based on the distance between the two eyes of the target object. Subsequently, the electronic device may determine the body stretching degree of the target object based on normalized widths of the groups of symmetric joint points, to reduce impact of bodies of different body types on determining the body stretching degree, and improve accuracy of determining the body stretching degree, so as to improve accuracy of determining the target cropping manner.

It should be understood that, for each group of symmetric joint points, the electronic device may normalize the width between the group of symmetric joint points according to X=L/e. X is a normalized width between the group of symmetric joint points, L is the width between the group of symmetric joint points before normalization, and e is the distance between the two eyes of the target object.

In another possible implementation, the electronic device may determine the body stretching degree of the target object based on horizontal coordinates of at least two joint points on a single side. To be specific, after obtaining the original image including the target object, the electronic device may determine, based on the original image, the at least two joint points located on the same side of the target object, and may determine a horizontal coordinate of each joint point. Subsequently, the electronic device may determine the body stretching degree of the target object based on the horizontal coordinates of the joint points.

Optionally, when determining that a quantity of groups of symmetric joint points of the target object is less than 2, the electronic device may determine the body stretching degree of the target object based on horizontal coordinates of at least two joint points on a single side. To be specific, when determining, based on the original image, that the quantity of groups of symmetric joint points of the target object is less than 2, for example, when determining that the target object includes only one group of symmetric joint points or has no symmetric joint point, the electronic device may determine the body stretching degree of the target object based on horizontal coordinates of at least two joint points on a single side.

For example, when the original image includes a side image of the target object, the electronic device may determine that the quantity of groups of symmetric joint points of the target object is less than 2. In this case, the electronic device may determine the body stretching degree of the target object based on horizontal coordinates of at least two joint points on a single side of the target object.

It should be noted that the electronic device may establish the image coordinate system by using the upper left vertex or the center point of the original image as an origin, to determine a horizontal coordinate of a joint point based on the image coordinate system.

In an example, the at least two joint points on a single side may include a joint point Q and a joint point W. The joint point Q may be a joint point whose horizontal coordinate can change in a relatively small range. The joint point W may be a joint point whose horizontal coordinate can change in a relatively large range. The single side may be a left side of the target object, that is, the joint point Q and the joint point W may be joint points on the left side of the target object. Alternatively, the single side may be a right side of the target object, that is, the joint point Q and the joint point W may be joint points on the right side of the target object.

For example, when the single side is the left side of the target object, the joint point Q may include the joint point corresponding to the left shoulder, and/or the joint point corresponding to the leftmost side of the pelvis. The joint point W may include at least one of the joint point corresponding to the left wrist, the joint point corresponding to the left knee, and the joint point corresponding to the left ankle.

For example, when the single side is the right side of the target object, the joint point Q may include the joint point corresponding to the right shoulder, and/or the joint point corresponding to the rightmost side of the pelvis. The joint point W may include at least one of the joint point corresponding to the right wrist, the joint point corresponding to the right knee, and the joint point corresponding to the right ankle.

That is, after obtaining the original image including the target object, the electronic device may determine the joint point Q and the joint point W on the single side of the target object, and may determine a horizontal coordinate of the joint point Q and a horizontal coordinate of the joint point W. Then, the electronic device may determine the body stretching degree of the target object based on the horizontal coordinate of the joint point Q and the horizontal coordinate of the joint point W.

For example, FIG. 9 is a diagram of joint points on a single side according to an embodiment of this application.

As shown in FIG. 9, when the joint point Q includes a joint point 910 corresponding to the left shoulder and a joint point 911 corresponding to the leftmost side of the pelvis, and the joint point W includes a joint point 920 corresponding to the left wrist, a joint point 921 corresponding to the left knee, and a joint point 922 corresponding to the left ankle, after obtaining the original image including the target object, the electronic device may determine, based on the original image, a horizontal coordinate of the joint point 910 corresponding to the left shoulder and a horizontal coordinate of the joint point 911 corresponding to the leftmost side of the pelvis. In addition, the electronic device may further determine, based on the original image, a horizontal coordinate of the joint point 920 corresponding to the left wrist, a horizontal coordinate of the joint point 921 corresponding to the left knee, and a horizontal coordinate of the joint point 922 corresponding to the left ankle. Then, the electronic device may determine the body stretching degree of the target object based on the horizontal coordinate of the joint point 910 corresponding to the left shoulder, the horizontal coordinate of the joint point 911 corresponding to the leftmost side of the pelvis, the horizontal coordinate of the joint point 920 corresponding to the left wrist, the horizontal coordinate of the joint point 921 corresponding to the left knee, and the horizontal coordinate of the joint point 922 corresponding to the left ankle.

It should be noted that, when the original image includes the side image of the target object, and when the body stretching degree of the target object is higher, a difference between horizontal coordinates of at least two joint points (the difference between the horizontal coordinates of the at least two joint points may be referred to as a horizontal coordinate difference below) on a single side of the target object is greater, or when the body stretching degree of the target object is lower, a horizontal coordinate difference on the single side of the target object is smaller.

In an example, the electronic device may determine the body stretching degree of the target object based on the horizontal coordinate difference on the single side of the target object, to determine the body aesthetic degree of the target object based on the horizontal coordinate difference on the single side of the target object.

For example, the electronic device may determine the horizontal coordinate difference on the single side of the target object as the body stretching degree of the target object. Alternatively, a conversion relationship (which may be referred to as a conversion relationship R3 below) between the horizontal coordinate difference and the body stretching degree may be set on the electronic device, and the electronic device may determine the body stretching degree of the target object based on the width difference and the conversion relationship R3. The conversion relationship R3 between the horizontal coordinate difference and the body stretching degree may be specifically determined based on an actual scenario. This is not limited in embodiments of this application. The following uses an example in which the electronic device determines the horizontal coordinate difference on the single side of the target object as the body stretching degree of the target object for description.

For example, the electronic device may determine the body aesthetic degree of the target object based on whether the horizontal coordinate difference on the single side of the target object is greater than or equal to a threshold (which may be referred to as a threshold C1 below) and/or whether the horizontal coordinate difference on the single side of the target object is less than a threshold (which may be referred to as a threshold C2 below).

It should be noted that the threshold C1 and the threshold C2 may be the same or may be different. The threshold C1 and the threshold C2 may be specific values, or may be value ranges. A specific value of the threshold C1 and a specific value of the threshold C2 may be specifically determined based on an actual scenario. This is not limited in embodiments of this application. For example, the threshold C1 and the threshold C2 may be determined based on a horizontal coordinate of the joint point Q and a horizontal coordinate of the joint point W when the body stretching degree of the target object and/or the other object is relatively high, and a horizontal coordinate of the joint point Q and a horizontal coordinate of the joint point W when the body stretching degree of the target object and/or the other object is relatively low.

In an example, when the threshold C1 is the same as the threshold C2, and when it is determined that a horizontal coordinate difference of the target object is greater than or equal to the threshold C1, the electronic device may determine that the body stretching degree of the target object is relatively high, that is, may determine that the body aesthetic degree of the target object is relatively high. In this case, the electronic device may determine that the target cropping manner corresponding to the original image is the body-first cropping manner. When determining that the horizontal coordinate difference of the target object is less than the threshold C2, the electronic device may determine that the body stretching degree of the target object is relatively low, that is, may determine that the body aesthetic degree of the target object is relatively low. In this case, the electronic device may determine that the target cropping manner corresponding to the original image is the face-first cropping manner.

In another example, when the threshold C1 is different from the threshold C2, and when it is determined that the horizontal coordinate difference of the target object is greater than or equal to the threshold C1, the electronic device may determine that the body stretching degree of the target object is relatively high, that is, may determine that the body aesthetic degree of the target object is relatively high. In this case, the electronic device may determine that the target cropping manner corresponding to the original image is the body-first cropping manner. When determining that the horizontal coordinate difference of the target object is less than the threshold C2, the electronic device may determine that the body stretching degree of the target object is relatively low, that is, may determine that the body aesthetic degree of the target object is relatively low. In this case, the electronic device may determine that the target cropping manner corresponding to the original image is the face-first cropping manner. When determining that the horizontal coordinate difference of the target object is greater than or equal to the threshold C2 and determining that the horizontal coordinate difference of the target object is less than the threshold C1, the electronic device may determine that the body stretching degree of the target object is moderate, that is, may determine that the body aesthetic degree of the target object is moderate.

It should be understood that, when determining that the body aesthetic degree of the target object is moderate, the electronic device may determine that the target cropping manner corresponding to the original image is a default cropping manner. For specific content of the default cropping manner, refer to related content of the default cropping manner that is in the target cropping manner corresponding to the original image and that is determined based on the body kinetic degree of the target object. Details are not described herein again.

In an example, when the at least two joint points on the single side include two joint points, the electronic device may determine the horizontal coordinate difference based on a value of a difference between horizontal coordinates. For example, the electronic device may determine a value of a difference between horizontal coordinates of the two joint points, and may determine the value of the difference as the horizontal coordinate difference.

In another example, when the at least two joint points on the single side include three or more joint points, the electronic device may determine the horizontal coordinate difference based on an average value of values of differences between horizontal coordinates. For example, the electronic device may determine a value of a difference between horizontal coordinates of any two joint points, and may determine an average value based on all values of differences, to determine the average value as the horizontal coordinate difference.

In another example, when the at least two joint points on the single side include three or more joint points, the electronic device may determine the horizontal coordinate difference based on a variance or a standard deviation of horizontal coordinates. For example, the electronic device may determine horizontal coordinates of the joint points, may determine a variance or a standard deviation of the horizontal coordinates based on the horizontal coordinates of the joint points, and may determine the variance or the standard deviation of the horizontal coordinates as the horizontal coordinate difference.

It should be noted that a specific value of the threshold C1 and a specific value of the threshold C2 in different scenarios may be determined based on an actual scenario. Thresholds C1 in different scenarios may be the same or different, and thresholds C2 in different scenarios may be the same or different. To be specific, the threshold C1 in the scenario in which the horizontal coordinate difference is determined based on the value of the difference between the horizontal coordinates, the threshold C1 in the scenario in which the horizontal coordinate difference is determined based on the average value of the values of the differences between the horizontal coordinates, and the threshold C1 in the scenario in which the horizontal coordinate difference is determined based on the variance or standard deviation of the horizontal coordinates may be the same or may be different. Similarly, the threshold C2 in the scenario in which the horizontal coordinate difference is determined based on the value of the difference between the horizontal coordinates, the threshold C2 in the scenario in which the horizontal coordinate difference is determined based on the average value of the values of the differences between the horizontal coordinates, and the threshold C2 in the scenario in which the horizontal coordinate difference is determined based on the variance or standard deviation of the horizontal coordinates may be the same or may be different.

In some other embodiments, the electronic device may determine the body aesthetic degree of the target object based on the body twisting degree of the target object. To be specific, after obtaining the original image including the target object, the electronic device may determine the body twisting degree of the target object based on the original image, and may determine the body aesthetic degree of the target object based on the body twisting degree of the target object.

It should be noted that, when the body twisting degree is relatively high, that is, when a twisting degree of the body is relatively high, it is generally considered that the body aesthetic degree is relatively high. When the body twisting degree is relatively low, that is, when a twisting degree of the body is relatively low, it is generally considered that the body aesthetic degree is low. That is, the body aesthetic degree at a relatively high twisting degree is generally higher than the body aesthetic degree at a relatively low twisting degree.

In an example, when determining that the body twisting degree of the target object is relatively high, the electronic device may determine that the body aesthetic degree of the target object is relatively high, that is, may determine that the target cropping manner corresponding to the original image is the body-first cropping manner. When determining that the body twisting degree of the target object is relatively low, the electronic device may determine that the body aesthetic degree of the target object is relatively low, that is, may determine that the target cropping manner corresponding to the original image is the face-first cropping manner.

In a possible implementation, the electronic device may determine the body twisting degree of the target object based on an angle (which may be referred to as an angle b below) between a connection line on which the shoulder is located and a connection line on which the pelvis is located.

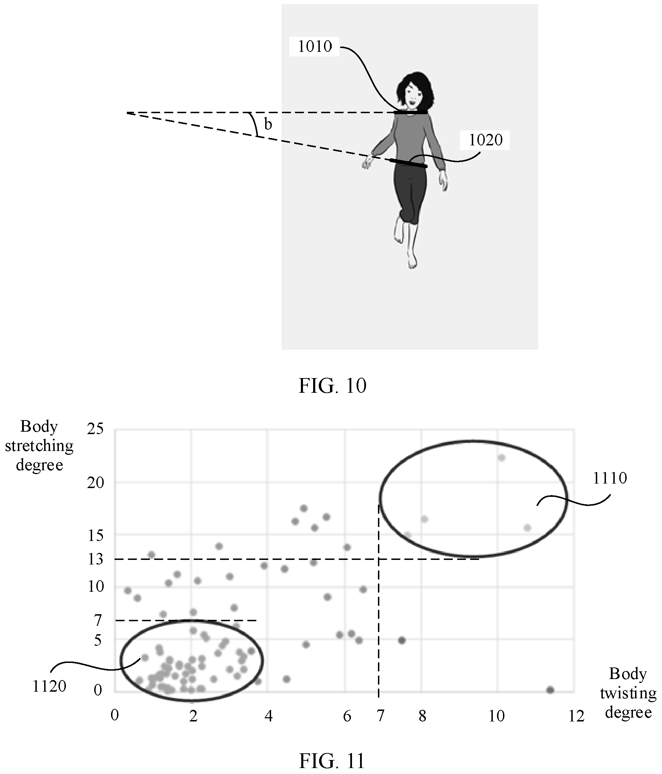

For example, FIG. 10 is a diagram of the angle b according to an embodiment of this application.

As shown in FIG. 10, the angle b may be an angle between a connection line 1010 on which the shoulder is located and a connection line 1020 on which the pelvis is located.

For example, the electronic device may determine the angle b as the body twisting degree of the target object. Alternatively, a conversion relationship (which may be referred to as a conversion relationship R4 below) between the angle b and the body twisting degree may be set on the electronic device, and the electronic device may determine the body twisting degree of the target object based on the angle b and the conversion relationship R4. It should be understood that the conversion relationship R4 between the angle b and the body twisting degree may be specifically determined based on an actual scenario. This is not limited in embodiments of this application. The following uses an example in which the electronic device determines the angle b as the body twisting degree of the target object for description.

It should be noted that, when the twisting degree of the body of the target object is relatively high, the angle b is generally relatively large. When the twisting degree of the body of the target object is relatively low, the angle b is generally relatively small. That is, when the body twisting degree of the target object is higher, the angle b is larger. When the body twisting degree of the target object is lower, the angle b is smaller.

In an example, the electronic device may determine the body aesthetic degree of the target object based on whether the body twisting degree of the target object is greater than or equal to a threshold (which may be referred to as a threshold D1 below) and/or whether the body twisting degree of the target object is less than a threshold (which may be referred to as a threshold D2 below).

It should be noted that the threshold D1 and the threshold D2 may be the same or may be different. The threshold D1 and the threshold D2 may be specific values, or may be value ranges. A specific value of the threshold D1 and a specific value of the threshold D2 may be specifically determined based on an actual scenario. This is not limited in embodiments of this application. For example, the threshold B1 and the threshold B2 may be determined based on the angle b when the twisting degree of the body of the target object and/or the another object is relatively high and the angle b when the twisting degree of the body of the target object and/or the another object is relatively low.

In an example, when the threshold D1 is the same as the threshold D2, and when it is determined that the angle b is greater than or equal to the threshold D1, the electronic device may determine that the body twisting degree of the target object is relatively high, that is, may determine that the body aesthetic degree of the target object is relatively high. In this case, the electronic device may determine that the target cropping manner corresponding to the original image is the body-first cropping manner. When determining that the angle b is less than the threshold D2, the electronic device may determine that the body twisting degree of the target object is relatively low, that is, may determine that the body aesthetic degree of the target object is relatively low. In this case, the electronic device may determine that the target cropping manner corresponding to the original image is the face-first cropping manner.

In another example, when the threshold D1 is different from the threshold D2, and when it is determined that the angle b is greater than or equal to the threshold D1, the electronic device may determine that the body twisting degree of the target object is relatively high, that is, may determine that the body aesthetic degree of the target object is relatively high. In this case, the electronic device may determine that the target cropping manner corresponding to the original image is the body-first cropping manner. When determining that the angle b is less than the threshold D2, the electronic device may determine that the body twisting degree of the target object is relatively low, that is, may determine that the body aesthetic degree of the target object is relatively low. In this case, the electronic device may determine that the target cropping manner corresponding to the original image is the face-first cropping manner. When determining that the angle b is greater than or equal to the threshold D2 and the angle b is less than the threshold D1, the electronic device may determine that the body twisting degree of the target object is moderate, that is, may determine that the body aesthetic degree of the target object is moderate.

It should be understood that, when determining that the body aesthetic degree of the target object is moderate, the electronic device may determine that the target cropping manner corresponding to the original image is a default cropping manner. For specific content of the default cropping manner, refer to related content of the default cropping manner that is in the target cropping manner corresponding to the original image and that is determined based on the body kinetic degree of the target object. Details are not described herein again.

In some other embodiments, the electronic device may determine the body aesthetic degree of the target object based on the body kinetic degree and the body stretching degree of the target object. To be specific, after obtaining the original image including the target object, the electronic device may determine the body kinetic degree and the body stretching degree of the target object based on the original image, and may determine the body aesthetic degree of the target object based on the body kinetic degree and the body stretching degree of the target object, to determine the body aesthetic degree of the target object by comprehensively considering the body kinetic degree and the body stretching degree. This can improve accuracy of determining the body aesthetic degree, thereby improving accuracy of determining the target cropping manner, and improving aesthetics of the cropped image.

In a possible implementation, when determining that the body kinetic degree of the target object is relatively high and determining that the body stretching degree of the target object is relatively high, the electronic device may determine that the body aesthetic degree of the target object is relatively high, that is, may determine that the target cropping manner corresponding to the original image is the body-first cropping manner.

When determining that the body kinetic degree of the target object is relatively low and determining that the body stretching degree of the target object is relatively low, the electronic device may determine that the body aesthetic degree of the target object is relatively low, that is, may determine that the target cropping manner corresponding to the original image is the face-first cropping manner.

When determining that the body kinetic degree of the target object is relatively high and determining that the body stretching degree of the target object is relatively low, or when determining that the body kinetic degree of the target object is relatively low and determining that the body stretching degree of the target object is relatively high, or when determining that the body kinetic degree of the target object is moderate, or when determining that the body stretching degree of the target object is moderate, the electronic device may determine that the body aesthetic degree of the target object is moderate, that is, may determine that the target cropping manner corresponding to the original image is the default cropping manner.

In some other embodiments, the electronic device may determine the body aesthetic degree of the target object based on the body kinetic degree and the body twisting degree of the target object. To be specific, after obtaining the original image including the target object, the electronic device may determine the body kinetic degree and the body twisting degree of the target object based on the original image, and may determine the body aesthetic degree of the target object based on the body kinetic degree and the body twisting degree of the target object, to determine the body aesthetic degree of the target object by comprehensively considering the body kinetic degree and the body twisting degree. This can improve accuracy of determining the body aesthetic degree, thereby improving accuracy of determining the target cropping manner, and improving aesthetics of the cropped image.

In a possible implementation, when determining that the body kinetic degree of the target object is relatively high and determining that the body twisting degree of the target object is relatively high, the electronic device may determine that the body aesthetic degree of the target object is relatively high, that is, may determine that the target cropping manner corresponding to the original image is the body-first cropping manner.

When determining that the body kinetic degree of the target object is relatively low and determining that the body twisting degree of the target object is relatively low, the electronic device may determine that the body aesthetic degree of the target object is relatively low, that is, may determine that the target cropping manner corresponding to the original image is the face-first cropping manner.

When determining that the body kinetic degree of the target object is relatively high and determining that the body twisting degree of the target object is relatively low, or when determining that the body kinetic degree of the target object is relatively low and determining that the body twisting degree of the target object is relatively high, or when determining that the body kinetic degree of the target object is moderate, or when determining that the body twisting degree of the target object is moderate, the electronic device may determine that the body aesthetic degree of the target object is moderate, that is, may determine that the target cropping manner corresponding to the original image is the default cropping manner.

In some other embodiments, the electronic device may determine the body aesthetic degree of the target object based on the body stretching degree and the body twisting degree of the target object. To be specific, after obtaining the original image including the target object, the electronic device may determine the body stretching degree and the body twisting degree of the target object based on the original image, and may determine the body aesthetic degree of the target object based on the body stretching degree and the body twisting degree of the target object, to determine the body aesthetic degree of the target object by comprehensively considering the body stretching degree and the body twisting degree. This can improve accuracy of determining the body aesthetic degree, thereby improving accuracy of determining the target cropping manner, and improving aesthetics of the cropped image.

In a possible implementation, when determining that the body stretching degree of the target object is relatively high and determining that the body twisting degree of the target object is relatively high, the electronic device may determine that the body aesthetic degree of the target object is relatively high, that is, may determine that the target cropping manner corresponding to the original image is the body-first cropping manner.

When determining that the body stretching degree of the target object is relatively low and determining that the body twisting degree of the target object is relatively low, the electronic device may determine that the body aesthetic degree of the target object is relatively low, that is, may determine that the target cropping manner corresponding to the original image is the face-first cropping manner.

When determining that the body stretching degree of the target object is relatively high and determining that the body twisting degree of the target object is relatively low, or when determining that the body stretching degree of the target object is relatively low and determining that the body twisting degree of the target object is relatively high, or when determining that the body stretching degree of the target object is moderate, or when determining that the body twisting degree of the target object is moderate, the electronic device may determine that the body aesthetic degree of the target object is moderate, that is, may determine that the target cropping manner corresponding to the original image is the default cropping manner.

FIG. 11 is a diagram 1 of an application scenario according to an embodiment of this application. In this application scenario, an example in which the body stretching degree is the width difference and the body twisting degree is the angle b is used for description. In FIG. 11, a horizontal coordinate represents the body twisting degree, and a vertical coordinate represents the body stretching degree.

As shown in FIG. 11, it is found by analyzing a large quantity of sample images that, when the body stretching degree and the body twisting degree of the target object are located in an area 1110, it may be considered that the body aesthetic degree of the target object is relatively high, that is, it may be considered that the body stretching degree of the target object is relatively high, and it may be considered that the body twisting degree of the target object is relatively high.

When the body stretching degree and the body twisting degree of the target object are located in an area 1120, it may be considered that the body aesthetic degree of the target object is relatively low, that is, it may be considered that the body stretching degree of the target object is relatively low, and it may be considered that the body twisting degree of the target object is relatively low.

When the body stretching degree and the body twisting degree of the target object are not located in the area 1110 and are not located in the area 1120, it may be considered that the body aesthetic degree of the target object is moderate, that is, it may be considered that the body stretching degree of the target object is relatively high, and it may be considered that the body twisting degree of the target object is relatively low; or it may be considered that the body stretching degree of the target object is relatively low, and it may be considered that the body twisting degree of the target object is relatively high; or it may be considered that the body stretching degree of the target object is moderate; or it may be considered that the body twisting degree of the target object is moderate.

That is, it can be learned from FIG. 11 that the threshold B1 corresponding to the body stretching degree may be 13, and the threshold B2 corresponding to the body stretching degree may be 7. The threshold D1 corresponding to the body twisting degree may be 7, and the threshold D2 corresponding to the body twisting degree may be 4.

In other words, when determining that the body stretching degree of the target object is greater than or equal to 13 and determining that the body twisting degree of the target object is greater than or equal to 7, the electronic device may determine that the body stretching degree of the target object is relatively high, and may determine that the body twisting degree of the target object is relatively high, that is, may determine that the body aesthetic degree of the target object is relatively high. In this case, the electronic device may determine that the target cropping manner corresponding to the original image is the body-first cropping manner.

When determining that the body stretching degree of the target object is less than 7 and determining that the body twisting degree of the target object is less than 4, the electronic device may determine that the body stretching degree of the target object is relatively low, and may determine that the body twisting degree of the target object is relatively low, that is, may determine that the body aesthetic degree of the target object is relatively low. In this case, the electronic device may determine that the target cropping manner corresponding to the original image is the face-first cropping manner.

When determining that the body stretching degree of the target object is greater than or equal to 13 and determining that the body twisting degree of the target object is less than 4, the electronic device may determine that the body stretching degree of the target object is relatively high, and may determine that the body twisting degree of the target object is relatively low, that is, may determine that the body aesthetic degree of the target object is moderate. In this case, the electronic device may determine that the target cropping manner corresponding to the original image is the default cropping manner.

When determining that the body stretching degree of the target object is less than 7 and determining that the body twisting degree of the target object is greater than or equal to 7, the electronic device may determine that the body stretching degree of the target object is relatively low, and may determine that the body twisting degree of the target object is relatively high, that is, may determine that the body aesthetic degree of the target object is moderate. In this case, the electronic device may determine that the target cropping manner corresponding to the original image is the default cropping manner.

When determining that the body stretching degree of the target object is greater than or equal to 7 and determining that the body stretching degree of the target object is less than 13, or when determining that the body twisting degree of the target object is greater than or equal to 4 and determining that the body twisting degree of the target object is less than 7, the electronic device may determine that the body aesthetic degree of the target object is moderate. In this case, the electronic device may determine that the target cropping manner corresponding to the original image is the default cropping manner.

In some other embodiments, the electronic device may determine the body aesthetic degree of the target object based on the body kinetic degree, the body stretching degree, and the body twisting degree of the target object. To be specific, after obtaining the original image including the target object, the electronic device may determine the body kinetic degree, the body stretching degree, and the body twisting degree of the target object based on the original image, and may determine the body aesthetic degree of the target object based on the body kinetic degree, the body stretching degree, and the body twisting degree of the target object, to determine the body aesthetic degree of the target object by comprehensively considering the body kinetic degree, the body stretching degree, and the body twisting degree. This can improve accuracy of determining the body aesthetic degree, thereby improving accuracy of determining the target cropping manner, and improving aesthetics of the cropped image.

In a possible implementation, when determining that the body kinetic degree, the body stretching degree, and the body twisting degree of the target object are all relatively high, that is, when determining that the body kinetic degree of the target object is relatively high, determining that the body stretching degree of the target object is relatively high, and determining that the body twisting degree of the target object is relatively high, the electronic device may determine that the body aesthetic degree of the target object is relatively high, that is, may determine that the target cropping manner corresponding to the original image is the body-first cropping manner.

When determining that the body kinetic degree, the body stretching degree, and the body twisting degree of the target object are all relatively low, that is, when determining that the body kinetic degree of the target object is relatively low, determining that the body stretching degree of the target object is relatively low, and determining that the body twisting degree of the target object is relatively low, the electronic device may determine that the body aesthetic degree of the target object is relatively low, that is, may determine that the target cropping manner corresponding to the original image is the face-first cropping manner.

When determining that one or two of the body kinetic degree, the body stretching degree, and the body twisting degree of the target object are relatively high, or when determining that at least one of the body kinetic degree, the body stretching degree, and the body twisting degree of the target object is moderate, the electronic device may determine that the body aesthetic degree of the target object is moderate, that is, may determine that the target cropping manner corresponding to the original image is the default cropping manner.

2. The electronic device determines **the** facial aesthetic **degree of the target object,** and determines, **based on the** facial aesthetic **degree** of **the target object, the target cropping manner corresponding** to **the original image.**

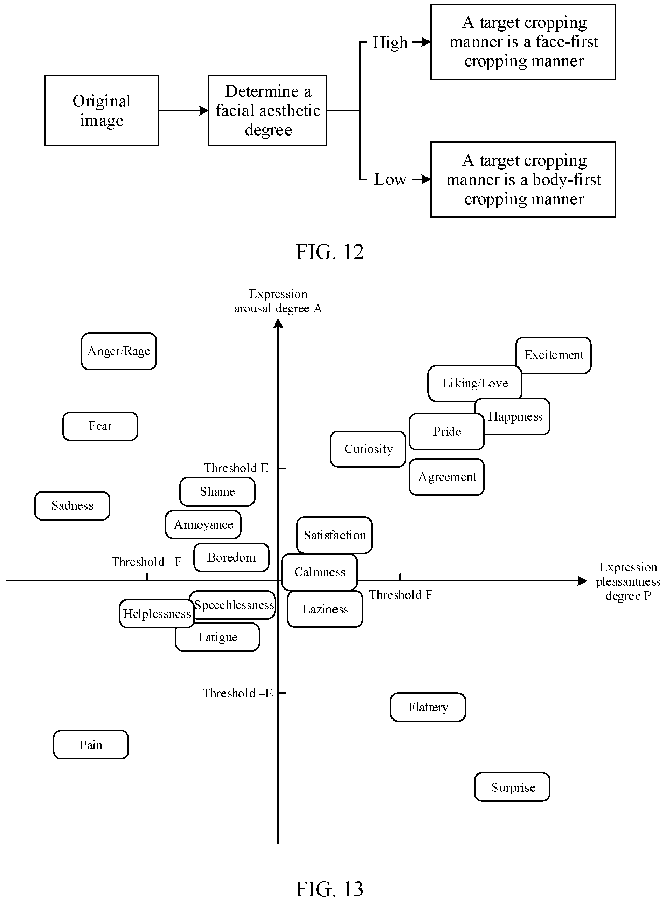

FIG. 12 is a schematic flowchart of determining, based on the facial aesthetic degree of the target object, the target cropping manner corresponding to the original image according to an embodiment of this application. For example, the facial aesthetic degree may include an expression aesthetic degree.

As shown in FIG. 12, after obtaining the original image including the target object, the electronic device may determine the facial aesthetic degree of the target object based on the original image. When determining that the facial aesthetic degree of the target object is relatively high, for example, when determining that a facial expression of the target object is expressive, the electronic device may determine that the target cropping manner corresponding to the original image is the face-first cropping manner. When determining that the facial aesthetic degree of the target object is relatively low, for example, when determining that a facial expression of the target object is plain, the electronic device may determine that the target cropping manner corresponding to the original image is the body-first cropping manner.

That is, during cropping of the original image, when determining that the facial expression of the target object is expressive, the electronic device may crop the original image in a cropping manner in which the facial expression is highlighted, so that a relatively aesthetic facial expression of the target object can be retained in the cropped image. This can improve aesthetics of the cropped image and user experience. When the facial expression of the target object is plain, the electronic device may crop the original image in a cropping manner in which the body is preferentially retained, so that a proportion of a face with a relatively low aesthetic degree in the cropped image can be reduced. This improves aesthetics of the cropped image and improves user experience.

In a possible implementation, the electronic device may determine the facial aesthetic degree of the target object based on an expression arousal (arousal, A) degree and an expression pleasantness (pleasantness, P) degree of the target object. To be specific, after obtaining the original image including the target object, the electronic device may determine the expression arousal degree A and the expression pleasantness degree P of the target object based on the original image, and may determine the facial aesthetic degree of the target object based on the expression arousal degree A and the expression pleasantness degree P of the target object.

In some embodiments, when an absolute value of the expression arousal degree A is less than a threshold (which may be referred to as a threshold E below), and an absolute value of the expression pleasantness degree P is less than a threshold (which may be referred to as a threshold F below), the electronic device may determine that the facial aesthetic degree of the target object is relatively low, that is, may determine that the facial expression of the target object is plain. When an absolute value of the expression arousal degree A is greater than or equal to a threshold E, or an absolute value of the expression pleasantness degree P is greater than or equal to a threshold F, the electronic device may determine that the facial aesthetic degree of the target object is relatively high, that is, may determine that the facial expression of the target object is expressive.

It should be understood that the threshold E and the threshold F may be specifically determined based on an actual scenario. This is not limited in embodiments of this application.

It should be noted that the expression arousal degree A may be used to measure a degree (or intensity) of an emotion. The expression pleasantness degree P may be used to measure a positive degree of the emotion. A manner of determining the expression arousal degree A and a manner of determining the expression pleasantness degree P may be specifically determined based on an actual scenario. This is not limited in embodiments of this application.

For example, after obtaining the original image including the target object, the electronic device may directly determine the expression arousal degree A and the expression pleasantness degree P of the target object based on the original image. A manner in which the electronic device directly determines the expression arousal degree A and the expression pleasantness degree P of the target object based on the original image may be any existing manner.

For example, after obtaining the original image including the target object, the electronic device may determine an expression category of the target object based on the original image, and may determine the expression arousal degree A and the expression pleasantness degree P of the target object based on a correspondence between the expression category of the target object and both the expression arousal degree A and the expression pleasantness degree P.

It should be understood that a manner of determining the expression category may be specifically determined based on an actual scenario. This is not limited in embodiments of this application. The correspondence between the expression category and both the expression arousal degree A and the expression pleasantness degree P may be specifically determined based on an actual scenario. This is not limited in embodiments of this application.

For example, FIG. 13 is an example diagram of the correspondence between the expression category and the expression arousal degree and the expression pleasantness degree.

In FIG. 13, a horizontal coordinate represents the expression pleasantness degree P, and a vertical coordinate represents the expression arousal degree A.

As shown in FIG. 13, when the expression category is excitement, liking/love, happiness, pride, curiosity, agreement, anger/rage, fear, sadness, pain, surprise, or flattery, the absolute value of the expression arousal degree A corresponding to the expression category is greater than or equal to the threshold E, or the absolute value of the expression pleasantness degree P corresponding to the expression category is greater than or equal to the threshold F. When the expression category is satisfaction, calmness, laziness, shame, annoyance, boredom, speechlessness, helplessness, or fatigue, the absolute value of the expression arousal degree A corresponding to the expression category is greater than or equal to the threshold E, or the absolute value of the expression pleasantness degree P corresponding to the expression category is greater than or equal to the threshold F.

To be specific, when determining that the expression category of the target object is excitement, liking/love, happiness, pride, curiosity, agreement, anger/rage, fear, sadness, pain, surprise, or flattery, the electronic device may determine that the absolute value of the expression arousal degree A corresponding to the expression category is greater than or equal to the threshold E, or may determine that the absolute value of the expression pleasantness degree P corresponding to the expression category is greater than or equal to the threshold F. In this case, the electronic device may determine that the facial expression of the target object is expressive, that is, may determine that the facial aesthetic degree of the target object is relatively high. Therefore, the electronic device may determine that the target cropping manner corresponding to the original image is the face-first cropping manner.

When determining that the expression category of the target object is satisfaction, calmness, laziness, shame, annoyance, boredom, speechlessness, helplessness, or fatigue, the electronic device may determine that the absolute value of the expression arousal degree A corresponding to the expression category is greater than or equal to the threshold E, or may determine that the absolute value of the expression pleasantness degree P corresponding to the expression category is greater than or equal to the threshold F. In this case, the electronic device may determine that the expression of the target object is relatively plain, that is, may determine that the facial aesthetic degree of the target object is relatively low. Therefore, the electronic device may determine that the target cropping manner corresponding to the original image is the body-first cropping manner.

In some embodiments, when it is determined that the original image does not include a face image of the target object, for example, when the original image is an image including a back view of the target object, the electronic device may directly determine that the facial aesthetic degree of the target object is relatively low, that is, may determine that the target cropping manner corresponding to the original image is the body-first cropping manner.

**3. The electronic device determines the body aesthetic degree and the facial aesthetic degree of the target object, and determines, based on the body aesthetic degree and the facial aesthetic degree of the target object, the target cropping manner corresponding to the original image.**

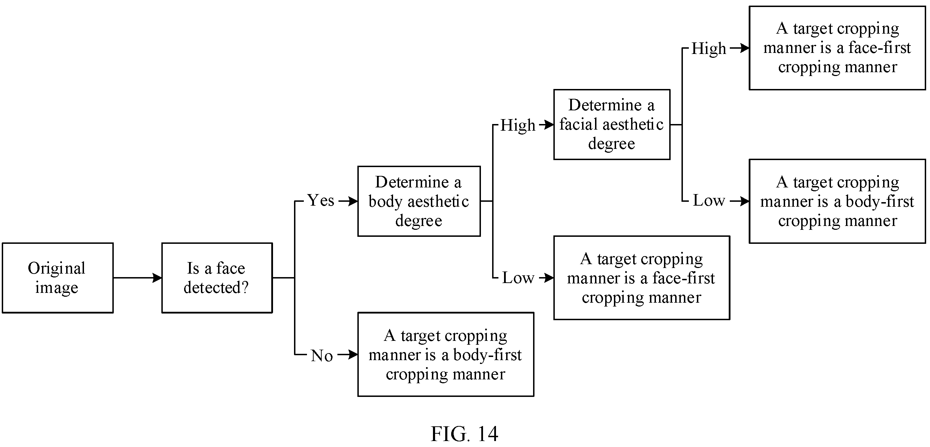

FIG. 14 is a schematic flowchart of determining, based on the body aesthetic degree and the facial aesthetic degree of the target object, the target cropping manner corresponding to the original image according to an embodiment of this application.

As shown in FIG. 14, after obtaining the original image including the target object, the electronic device may determine the body aesthetic degree of the target object based on the original image. When determining that the body aesthetic degree of the target object is relatively low, the electronic device may determine that the target cropping manner corresponding to the original image is the face-first cropping manner, to decrease a proportion of a body with a relatively low aesthetic degree in the cropped image, so as to improve aesthetics of the cropped image.

When determining that the body aesthetic degree of the target object is relatively high, the electronic device may determine the facial aesthetic degree of the target object. When determining that the facial aesthetic degree of the target object is relatively high, the electronic device may determine that the target cropping manner corresponding to the original image is the face-first cropping manner, so that a relatively aesthetic facial expression of the target object can be retained in the cropped image. This can improve aesthetics of the cropped image. When determining that the facial aesthetic degree of the target object is relatively low, the electronic device may determine that the target cropping manner corresponding to the original image is the body-first cropping manner, so that a relatively aesthetic body of the target object can be retained in the cropped image, and a proportion of a face with a relatively low aesthetic degree in the cropped image can be decreased. This can improve aesthetics of the cropped image.

In an example, as shown in FIG. 14, after obtaining the original image including the target object, the electronic device may detect whether the original image includes a face image. When no face image is detected in the original image, for example, when the original image is an image including a back view of the target object, the electronic device may directly determine that the target cropping manner corresponding to the original image is the body-first cropping manner. In other words, when the electronic device detects no face image in the original image, the electronic device may directly crop the original image in the body-first cropping manner.

It should be noted that, in FIG. 14, the body aesthetic degree of the target object is first determined, and then the facial aesthetic degree of the target object is determined, which is merely an example for explanation, and should not be construed as a limitation on embodiments of this application. A sequence of determining the body aesthetic degree and the facial aesthetic degree of the target object is not limited in embodiments of this application. The body aesthetic degree and the facial aesthetic degree of the target object may be determined at the same time, or the body aesthetic degree of the target object may be determined first, and then the facial aesthetic degree of the target object may be determined, or the facial aesthetic degree of the target object may be determined first, and then the body aesthetic degree of the target object may be determined. For specific content of determining the body aesthetic degree and the facial aesthetic degree of the target object, refer to the foregoing related content of determining the body aesthetic degree and the facial aesthetic degree of the target object. Details are not described herein again.

In this embodiment of this application, after determining the target cropping manner corresponding to the original image, the electronic device may crop the original image in the target cropping manner, to obtain the cropped image. The following describes in detail a process in which the electronic device crops the original image in the target cropping manner, to obtain the cropped image.

In some embodiments, after obtaining the original image including the target object, the electronic device may determine a face orientation of the target object based on the original image. After determining the target cropping manner corresponding to the original image, the electronic device may crop the original image in the target cropping manner based on the face orientation of the target object, to obtain the cropped image.

For example, the electronic device may determine a target position of the target object in the cropped image based on the face orientation of the target object, and may crop the original image in the target cropping manner based on the target position of the target object in the cropped image, to obtain a cropped image in which the target object is located at the target position. It should be understood that the face orientation of the target object may include forward, sideward, and backward. The frontward may mean that the original image includes the front of the face of the target object. The sideward may mean that the original image includes a side of the face of the target object. The backward may mean that the original image does not include the face of the target object.

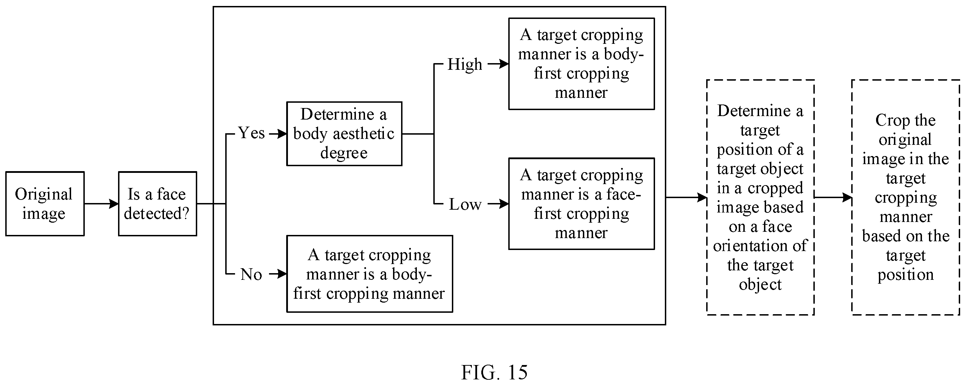

Refer FIG. 15. FIG. 15 is a schematic flowchart of another image cropping method according to an embodiment of this application. In the diagram, an example in which the target cropping manner corresponding to the original image is determined based on the body aesthetic degree shown in FIG. 6 is used to describe how to crop the original image in the target cropping manner.

As shown in FIG. 15, after determining the target cropping manner based on the body aesthetic degree, the electronic device may determine the target position of the target object in the cropped image based on the face orientation of the target object, and may crop the original image in the target cropping manner based on the target position of the target object in the cropped image. For specific content of determining the target cropping manner based on the body aesthetic degree, refer to related content of determining the target cropping manner based on the body aesthetic degree shown in FIG. 6.

In a possible implementation, when the face orientation of the target object is frontward or backward, the electronic device may determine that the target position of the target object in the cropped image is a middle position. In this case, the electronic device may crop the original image in the target cropping manner based on the middle position of the target object in the cropped image, to obtain the cropped image. That is, when the original image is cropped in the target cropping manner, the original image may be cropped in a manner in which the target object is located at the middle position of the cropped image.

It should be understood that the target position of the target object in the cropped image may be a horizontal coordinate position of a center point of the target object. That the target position of the target object in the cropped image is the middle position may mean that a horizontal coordinate of the center point of the target object is the same as a horizontal coordinate of a center point of the cropped image.

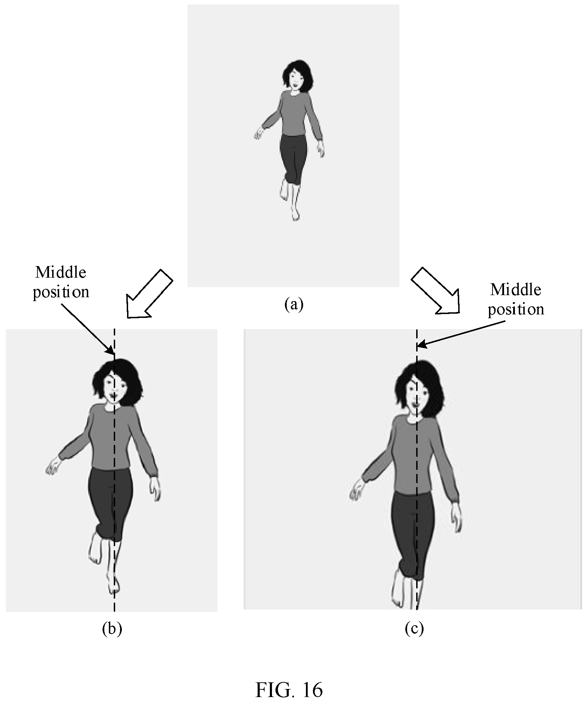

FIG. 16 is a diagram 2 of an application scenario according to an embodiment of this application. In this application scenario, an example in which the target cropping manner is the body-first cropping manner is used for description.

The electronic device may determine, based on the original image shown in (a) in FIG. 16, that the face orientation of the target object is the frontward. Therefore, when cropping the original image, the electronic device may determine, based on the face orientation of the target object (namely, the frontward), that the target position of the target object in the cropped image is the middle position.

For example, when determining that the original aspect ratio of the original image is greater than the preset aspect ratio (for example, a preset aspect ratio P1) and when cropping the original image in the body-first cropping manner, the electronic device may crop the original image based on the target object located at the middle position of the cropped image. For example, a cropped image shown in (b) in FIG. 16 may be obtained.

For example, when determining that the original aspect ratio of the original image is less than the preset aspect ratio (for example, a preset aspect ratio P2), the electronic device may proportionally scale up the original image based on the preset aspect ratio P2. If an aspect ratio of the enlarged original image is greater than the preset aspect ratio P2, when cropping the enlarged original image in the body-first cropping manner, the electronic device may crop the original image based on the target object located at the middle position of the cropped image. For example, a cropped image shown in (c) in FIG. 16 may be obtained.

In another possible implementation, when the face orientation of the target object is sideward, the electronic device may determine an offset distance of the target object based on the preset aspect ratio, and may determine an offset direction of the target object based on the face orientation of the target object. The preset aspect ratio may be, for example, the aspect ratio of the screen of the electronic device, or an aspect ratio of a profile frame of software. Then, the electronic device may determine the target position of the target object in the cropped image based on the offset direction and the offset distance of the target object. The aspect ratio may be a ratio of a length (namely, a length in a horizontal direction) to a width (namely, a width in a vertical direction). The offset distance may be a distance between the target position of the target object in the cropped image and the middle position of the cropped image.

In an example, when the face orientation of the target object is leftward, the electronic device may determine that the offset direction of the target object is rightward. That is, when determining that the face of the target object faces a left side, the electronic device determines that the target position of the target object in the cropped image may be biased toward a right side of the cropped image.

In another example, when the face orientation of the target object is rightward, the electronic device may determine that the offset direction of the target object is leftward. When determining that the face of the target object faces a right side, the electronic device determines that the target position of the target object in the cropped image may be biased toward a left side of the cropped image.

For example, the electronic device may determine, based on a relationship between the preset aspect ratio and an offset ratio, the offset ratio corresponding to the target object, and may determine the offset distance of the target object based on the preset aspect ratio and the offset ratio corresponding to the target object. The offset ratio corresponding to the target object may be a ratio of the offset distance corresponding to the target object to half of a length corresponding to the preset aspect ratio. That is, Offset ratio=Offset distance:(Length corresponding to the preset aspect ratio/2). For example, when the preset aspect ratio is the aspect ratio of the screen of the electronic device, the length corresponding to the preset aspect ratio may be a length of the screen of the electronic device. For example, when the preset aspect ratio is an aspect ratio of a profile frame of software, the length corresponding to the preset aspect ratio may be a length of the profile frame of the software.

In an example, the relationship between the preset aspect ratio (x) and the offset ratio (y) may be y=0.1307ln(x)+0.2543.

Optionally, the relationship between the preset aspect ratio (x) and the offset ratio (y) may be represented by using a curve.

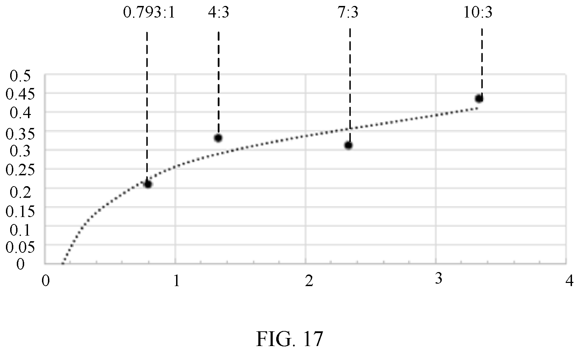

FIG. 17 is a diagram of the relationship between the preset aspect ratio and the offset ratio corresponding to the target object according to an embodiment of this application. In FIG. 17, a horizontal coordinate represents the preset aspect ratio, and a vertical coordinate represents the offset ratio.

As shown in FIG. 17, when the preset aspect ratio is 0.793:1, the electronic device may determine that the offset ratio corresponding to the target object is 0.21, that is, may determine that the offset distance of the target object is (the length corresponding to the preset aspect ratio/2)*0.21. When the preset aspect ratio is 4:3, the electronic device may determine that the offset ratio corresponding to the target object is 0.3, that is, may determine that the offset distance of the target object is (the length corresponding to the preset aspect ratio/2)*0.3. When the preset aspect ratio is 7:3, the electronic device may determine that the offset ratio corresponding to the target object is 0.35, that is, may determine that the offset distance of the target object is (the length corresponding to the preset aspect ratio/2)*0.35. When the preset aspect ratio is 10:3, the electronic device may determine that the offset ratio corresponding to the target object is 0.41, that is, may determine that the offset distance of the target object is (the length corresponding to the preset aspect ratio/2)*0.41.

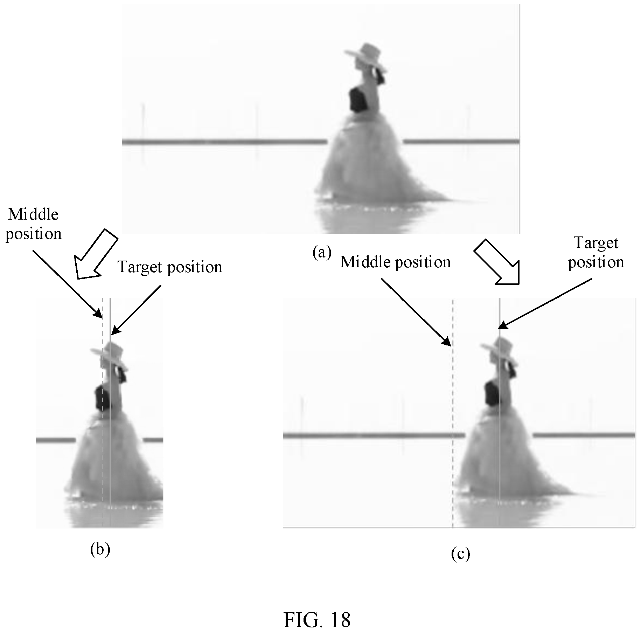

FIG. 18 is a diagram 3 of an application scenario according to an embodiment of this application. In this application scenario, an example in which the target cropping manner is the body-first cropping manner is used for description.

The electronic device may determine, based on the original image shown in (a) in FIG. 18, that the face orientation of the target object is leftward. Therefore, when cropping the original image, the electronic device may determine, based on the face orientation of the target object (namely, leftward), that the offset direction of the target object is rightward.

For example, when the original image needs to be cropped into a cropped image with the preset aspect ratio P1, the electronic device may determine, based on the preset aspect ratio P1, the offset ratio corresponding to the target object, and may determine the offset distance of the target object based on the preset aspect ratio P1 and the offset ratio corresponding to the target object. Then, the electronic device may determine the target position of the target object in the cropped image based on the offset direction (that is, rightward) and the offset distance of the target object. Therefore, when cropping the original image in the body-first cropping manner, the electronic device may crop the original image based on the target position of the target object in the cropped image. For example, a cropped image shown in (b) in FIG. 18 may be obtained.

For example, when the original image needs to be cropped into a cropped image with the preset aspect ratio P2, the electronic device may determine, based on the preset aspect ratio P2, the offset ratio corresponding to the target object, and may determine the offset distance of the target object based on the preset aspect ratio P2 and the offset ratio corresponding to the target object. Then, the electronic device may determine the target position of the target object in the cropped image based on the offset direction (that is, rightward) and the offset distance of the target object. When cropping the original image in the body-first cropping manner, the electronic device may crop the original image based on the target position of the target object in the cropped image. For example, a cropped image shown in (c) in FIG. 18 may be obtained.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the image cropping method in the foregoing embodiments, an embodiment of this application further provides an image cropping apparatus. Modules of the apparatus may correspondingly implement the steps of the image cropping method.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

Persons skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the foregoing method embodiments. Details are not described herein again.

An embodiment of this application further provides an electronic device. The electronic device includes at least one memory, at least one processor, and a computer program that is stored in the at least one memory and that may be run on the at least one processor. When the processor executes the computer program, the electronic device is caused to implement the steps in any one of the foregoing method embodiments. For example, a structure of the electronic device may be shown in FIG. 2.

An embodiment of this application further provides a computer-readable storage medium, where the computer-readable storage medium stores a computer program, and when the computer program is executed by a computer, the computer is caused to implement the steps in any one of the foregoing method embodiments.

An embodiment of this application further provides a computer program product, where when the computer program product runs on an electronic device, the electronic device is caused to implement the steps in any one of the foregoing method embodiments.

When an integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk drive, a magnetic disk, or an optical disc.

In the foregoing embodiments, the descriptions of all embodiments have respective focuses. For a part that is not described or recorded in detail in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. An image cropping method, comprising:
obtaining an original image, wherein the original image comprises a target object;
determining a body aesthetic degree of the target object, and/or determining a facial aesthetic degree of the target object;
determining, based on the body aesthetic degree and/or the facial aesthetic degree, a target cropping manner corresponding to the original image; and
cropping the original image in the target cropping manner, to obtain a cropped image, wherein the cropped image comprises all or a part of the target object.

2. The method according to claim 1, wherein determining the body aesthetic degree of the target object comprises:
determining a body kinetic degree of the target object, wherein the body kinetic degree represents a motion status of the target object; and
determining the body aesthetic degree of the target object based on the body kinetic degree.

3. The method according to claim 2, wherein determining the body kinetic degree of the target object comprises:
obtaining a first angle corresponding to the target object, wherein the first angle is an angle between a vertical direction and a connection line between a top of a head and a midpoint of a pelvis of the target object; and
determining the body kinetic degree of the target object based on the first angle.

4. The method according to claim 2 or 3, wherein determining the body aesthetic degree of the target object based on the body kinetic degree comprises:
when the body kinetic degree is greater than or equal to a first threshold, determining that the body aesthetic degree of the target object meets a first condition; or
when the body kinetic degree is less than a second threshold, determining that the body aesthetic degree of the target object meets a second condition, wherein the first threshold is greater than or equal to the second threshold.

5. The method according to claim 2 or 3, wherein determining the body aesthetic degree of the target object based on the body kinetic degree comprises:
determining a body stretching degree of the target object, wherein the body stretching degree represents a stretching degree of a body of the target object; and
determining the body aesthetic degree of the target object based on the body kinetic degree and the body stretching degree.

6. The method according to claim 5, wherein determining the body aesthetic degree of the target object based on the body kinetic degree and the body stretching degree comprises:
when the body kinetic degree is greater than or equal to a first threshold, and the body stretching degree is greater than or equal to a third threshold, determining that the body aesthetic degree of the target object meets a first condition; or
when the body kinetic degree is less than a second threshold, and the body stretching degree is less than a fourth threshold, determining that the body aesthetic degree of the target object meets a second condition, wherein
the first threshold is greater than or equal to the second threshold, and the third threshold is greater than or equal to the fourth threshold.

7. The method according to claim 2 or 3, wherein determining the body aesthetic degree of the target object based on the body kinetic degree comprises:
determining a body twisting degree of the target object, wherein the body twisting degree represents a twisting degree of a body of the target object; and
determining the body aesthetic degree of the target object based on the body kinetic degree and the body twisting degree.

8. The method according to claim 7, wherein determining the body aesthetic degree of the target object based on the body kinetic degree and the body twisting degree comprises:
when the body kinetic degree is greater than or equal to a first threshold, and the body twisting degree is greater than or equal to a fifth threshold, determining that the body aesthetic degree of the target object meets a first condition; or
when the body kinetic degree is less than a second threshold, and the body twisting degree is less than a sixth threshold, determining that the body aesthetic degree of the target object meets a second condition, wherein
the first threshold is greater than or equal to the second threshold, and the fifth threshold is greater than or equal to the sixth threshold.

9. The method according to claim 2 or 3, wherein determining the body aesthetic degree of the target object based on the body kinetic degree comprises:
determining a body stretching degree and a body twisting degree of the target object, and determining the body aesthetic degree of the target object based on the body kinetic degree, the body stretching degree, and the body twisting degree.

10. The method according to claim 1, wherein determining the body aesthetic degree of the target object comprises:
determining a body stretching degree of the target object; and
determining the body aesthetic degree of the target object based on the body stretching degree.

11. The method according to claim 10, wherein determining the body stretching degree of the target object comprises:
determining a first width and a second width, wherein the first width is a width between first symmetric joint points of the target object, and the second width is a width between second symmetric joint points of the target object; and
determining the body stretching degree of the target object based on the first width and the second width.

12. The method according to claim 11, wherein the first symmetric joint points comprise a group of joint points corresponding to shoulders and/or a group of joint points corresponding to a pelvis, and the second symmetric joint points comprise at least one of a group of joint points corresponding to wrists, a group of joint points corresponding to knees, and a group of joint points corresponding to ankles.

13. The method according to claim 10, wherein determining the body stretching degree of the target object comprises:
determining a first horizontal coordinate and a second horizontal coordinate, wherein the first horizontal coordinate is a horizontal coordinate of a first target joint point of the target object, the second horizontal coordinate is a horizontal coordinate of a second target joint point of the target object, and the first target joint point and the second target joint point are joint points on a same side of the target object; and
determining the body stretching degree of the target object based on the first horizontal coordinate and the second horizontal coordinate.

14. The method according to claim 13, wherein the first target joint point comprises a joint point corresponding to a shoulder and/or a joint point corresponding to a pelvis, and the second target joint point comprises at least one of a joint point corresponding to a wrist, a joint point corresponding to a knee, and a joint point corresponding to an ankle.

15. The method according to any one of claims 10 to 14, wherein determining the body aesthetic degree of the target object based on the body stretching degree comprises:
when the body stretching degree is greater than or equal to a third threshold, determining that the body aesthetic degree of the target object meets a first condition; or
when the body stretching degree is less than a fourth threshold, determining that the body aesthetic degree of the target object meets a second condition, wherein the third threshold is greater than or equal to the fourth threshold.

16. The method according to any one of claims 10 to 15, wherein determining the body aesthetic degree of the target object based on the body stretching degree comprises:
determining a body twisting degree of the target object, and determining the body aesthetic degree of the target object based on the body stretching degree and the body twisting degree.

17. The method according to claim 16, wherein determining the body aesthetic degree of the target object based on the body stretching degree and the body twisting degree comprises:
when the body stretching degree is greater than or equal to the third threshold, and the body twisting degree is greater than or equal to a fifth threshold, determining that the body aesthetic degree of the target object meets the first condition; or
when the body stretching degree is less than the fourth threshold, and the body twisting degree is less than a sixth threshold, determining that the body aesthetic degree of the target object meets the second condition, wherein
the third threshold is greater than or equal to the fourth threshold, and the fifth threshold is greater than or equal to the sixth threshold.

18. The method according to claim 1, wherein determining the body aesthetic degree of the target object comprises:
determining a body twisting degree of the target object; and
determining the body aesthetic degree of the target object based on the body twisting degree.

19. The method according to claim 18, wherein determining the body twisting degree of the target object comprises:
obtaining a second angle corresponding to the target object, wherein the second angle is an angle between a first connection line and a second connection line, the first connection line is a connection line corresponding to third symmetric joint points of the target object, and the second connection line is a connection line corresponding to fourth symmetric joint points of the target object; and
determining the body twisting degree of the target object based on the second angle.

20. The method according to claim 19, wherein the third symmetric joint points comprise a group of joint points corresponding to shoulders, and the fourth symmetric joint points comprise a group of joint points corresponding to a pelvis.

21. The method according to any one of claims 18 to 20, wherein determining the body aesthetic degree of the target object based on the body twisting degree comprises:
when the body twisting degree is greater than or equal to a fifth threshold, determining that the body aesthetic degree of the target object meets a first condition; or
when the body twisting degree is less than a sixth threshold, determining that the body aesthetic degree of the target object meets a second condition, wherein the fifth threshold is greater than or equal to the sixth threshold.

22. The method according to claim 1, wherein determining the facial aesthetic degree of the target object comprises:
determining an expression arousal degree and an expression pleasantness degree of the target object, and determining the facial aesthetic degree of the target object based on the expression arousal degree and the expression pleasantness degree.

23. The method according to claim 22, wherein determining the facial aesthetic degree of the target object based on the expression arousal degree and the expression pleasantness degree comprises:
when the expression arousal degree is greater than or equal to a seventh threshold, or the expression pleasantness degree is greater than or equal to an eighth threshold, determining that the facial aesthetic degree meets a third condition; or
when the expression arousal degree is less than the seventh threshold, and the expression pleasantness degree is less than the eighth threshold, determining that the facial aesthetic degree meets a fourth condition.

24. The method according to any one of claims 1 to 23, wherein determining, based on the body aesthetic degree and/or the facial aesthetic degree, the target cropping manner corresponding to the original image comprises:
when the body aesthetic degree meets the first condition, determining that the target cropping manner is a first cropping manner, wherein the first cropping manner is a body-first cropping manner; or
when the body aesthetic degree meets the second condition, determining that the target cropping manner is a second cropping manner, wherein the second cropping manner is a face-first cropping manner.

25. The method according to any one of claims 1 to 23, wherein determining, based on the body aesthetic degree and/or the facial aesthetic degree, the target cropping manner corresponding to the original image comprises:
when the facial aesthetic degree meets the third condition, determining that the target cropping manner is a second cropping manner, wherein the second cropping manner is a face-first cropping manner; or
when the facial aesthetic degree meets the fourth condition, determining that the target cropping manner is a first cropping manner, wherein the first cropping manner is a body-first cropping manner.

26. The method according to any one of claims 1 to 23, wherein determining, based on the body aesthetic degree and/or the facial aesthetic degree, the target cropping manner corresponding to the original image comprises:
when the body aesthetic degree meets the first condition, and the facial aesthetic degree meets the fourth condition, determining that the target cropping manner is a first cropping manner, wherein the first cropping manner is a body-first cropping manner; or
when the body aesthetic degree meets the first condition, and the facial aesthetic degree meets the third condition, or when the body aesthetic degree meets the second condition, determining that the target cropping manner is a second cropping manner, wherein the second cropping manner is a face-first cropping manner.

27. The method according to any one of claims 1 to 26, wherein cropping the original image in the target cropping manner, to obtain the cropped image comprises:
determining a face orientation of the target object; and
determining a target position of the target object in the cropped image based on the face orientation of the target object, and cropping the original image in the target cropping manner based on the target position, to obtain the cropped image, wherein a position of the target object in the cropped image is the target position.

28. The method according to claim 27, wherein determining the target position of the target object in the cropped image based on the face orientation of the target object comprises:
when the face orientation is forward or backward, determining that the target position of the target object in the cropped image is a middle position.

29. The method according to claim 27, wherein determining the target position of the target object in the cropped image based on the face orientation of the target object comprises:
when the face orientation is lateral, determining an offset distance of the target object based on a preset aspect ratio, wherein the preset aspect ratio is an aspect ratio corresponding to the cropped image, and the offset distance is a distance between the target position of the target object in the cropped image and a middle position of the cropped image; and
determining the target position of the target object in the cropped image based on the offset distance of the target object.

30. The method according to claim 29, wherein determining the target position of the target object in the cropped image based on the offset distance of the target object comprises:
when the face orientation is lateral, determining an offset direction of the target object based on the face orientation; and
determining the target position of the target object in the cropped image based on the offset distance and the offset direction of the target object.

31. An image cropping method, comprising:
obtaining an original image, wherein the original image comprises a target object;
determining a body aesthetic degree of the target object;
determining, based on the body aesthetic degree, a target cropping manner corresponding to the original image, wherein when the body aesthetic degree is high, the target cropping manner is a body-first cropping manner, or when the body aesthetic degree is low, the target cropping manner is a face-first cropping manner; and
cropping the original image in the target cropping manner, to obtain a cropped image, wherein the cropped image comprises all or a part of the target object, and when the target cropping manner is the body-first cropping manner, the cropped image comprises all of the target object, or when the target cropping manner is the face-first cropping manner, the cropped image comprises the part of the target object, wherein the part comprises a face.

32. The method according to claim 31, wherein determining the body aesthetic degree of the target object comprises:
determining a body kinetic degree of the target object, wherein the body kinetic degree represents a motion status of the target object; and
determining the body aesthetic degree of the target object based on the body kinetic degree, wherein when the body kinetic degree is greater than or equal to a first threshold, the body aesthetic degree is high, or when the body kinetic degree is less than a second threshold, the body aesthetic degree is low, wherein the first threshold is greater than or equal to the second threshold.

33. The method according to claim 31, wherein determining the body aesthetic degree of the target object comprises:
determining a body stretching degree of the target object, wherein the body stretching degree represents a stretching degree of a body of the target object; and
determining the body aesthetic degree of the target object based on the body stretching degree, wherein when the body stretching degree is greater than or equal to a third threshold, the body aesthetic degree is high, or when the body stretching degree is less than a fourth threshold, the body aesthetic degree is low, wherein the third threshold is greater than or equal to the fourth threshold.

34. The method according to claim 31, wherein determining the body aesthetic degree of the target object comprises:
determining a body twisting degree of the target object, wherein the body twisting degree represents a twisting degree of a body of the target object; and
determining the body aesthetic degree of the target object based on the body twisting degree, wherein when the body twisting degree is greater than or equal to a fifth threshold, the body aesthetic degree is high, or when the body twisting degree is less than a sixth threshold, the body aesthetic degree is low, wherein the fifth threshold is greater than or equal to the sixth threshold.

35. The method according to any one of claims 31 to 34, wherein cropping the original image in the target cropping manner, to obtain the cropped image comprises:
determining a face orientation of the target object; and
determining a target position of the target object in the cropped image based on the face orientation of the target object, and cropping the original image in the target cropping manner based on the target position, to obtain the cropped image, wherein a position of the target object in the cropped image is the target position.

36. The method according to claim 35, wherein determining the target position of the target object in the cropped image based on the face orientation of the target object comprises:
when the face orientation is forward or backward, determining that the target position of the target object in the cropped image is a middle position.

37. The method according to claim 35, wherein determining the target position of the target object in the cropped image based on the face orientation of the target object comprises:
when the face orientation is lateral, determining an offset distance of the target object based on a preset aspect ratio, wherein the preset aspect ratio is an aspect ratio corresponding to the cropped image, and the offset distance is a distance between the target position of the target object in the cropped image and a middle position of the cropped image; and
determining the target position of the target object in the cropped image based on the offset distance of the target object.

38. An electronic device, comprising a memory, a processor, and a computer program that is stored in the memory and that is executable on the processor, wherein when the processor executes the computer program, the electronic device is enabled to implement the image cropping method according to any one of claims 1 to 37.

39. A computer-readable storage medium, wherein the computer-readable storage medium stores a computer program, and when the computer program is executed by a computer, the computer is enabled to implement the image cropping method according to any one of claims 1 to 37.

40. A computer program product, wherein when the computer program product runs on an electronic device, the electronic device is enabled to perform the image cropping method according to any one of claims 1 to 37.
